(19) Europäisches Patentamt
European Patent Office
Office européen des brevets

(11) EP 4 786 941 A1

(12) EUROPEAN PATENT APPLICATION
published in accordance with Art. 153(4) EPC

(43) Date of publication:
**05.08.2026 Bulletin 2026/32**

(21) Application number: **24871276.2**

(22) Date of filing: **04.01.2024**

(51) International Patent Classification (IPC):
***G01M 3/24*** *(2006.01)*

(52) Cooperative Patent Classification (CPC):
**G01M 3/24**

(86) International application number:
**PCT/JP2024/000020**

(87) International publication number:
**WO 2025/069458 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.09.2023 JP 2023163004**

(71) Applicant: **Hitachi, Ltd.**
**Tokyo 100-8280 (JP)**

(72) Inventors:
- **KOYAMA Akihiro**
  **Tokyo 100-8280 (JP)**
- **KAWAMOTO Takashi**
  **Tokyo 100-8280 (JP)**
- **ISOBE Atsushi**
  **Tokyo 100-8280 (JP)**
- **SHIZUMI Soraya**
  **Tokyo 100-8280 (JP)**

(74) Representative: **Mewburn Ellis LLP**
**Aurora Building**
**Counterslip**
**Bristol BS1 6BX (GB)**

# (54) WATER LEAKAGE FLOW RATE ESTIMATION SYSTEM AND WATER LEAKAGE FLOW RATE ESTIMATION METHOD

(57) ABSTRACT: A water leakage flow rate estimation system comprising an analysis unit and a display unit, wherein the analysis unit includes: an exploration range estimation unit that receives a water leakage determination result, an installation position of the sensor, and pipeline information around the installation position as inputs, and outputs an exploration range indication signal, a water leakage point estimation unit that receives the pipeline information and an exploration image, and outputs an estimated water leakage point, and a water leakage flow rate estimation unit that receives the sensor data, the estimated water leakage point, and a water leakage vibration propagation model, and outputs an estimated water leakage flow rate, the analysis unit outputs the exploration range indication signal, the estimated water leakage point, and the estimated water leakage flow rate, and the display unit displays the exploration range indication signal, the estimated water leakage point, and the estimated water leakage flow rate.

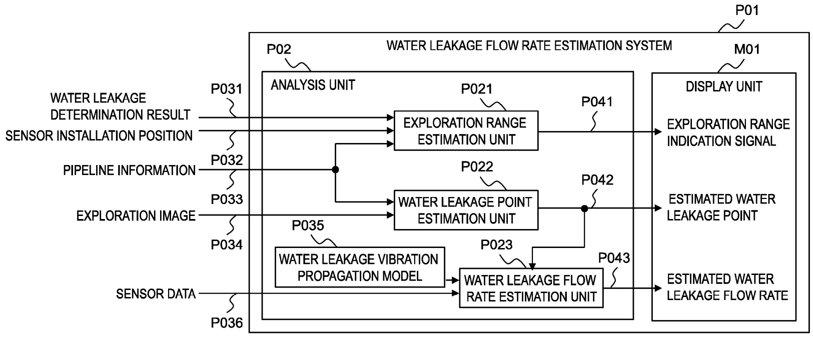


*Fig. 3*

EP 4 786 941 A1

## Description

INCORPORATION BY REFERENCE

The present application claims priority from Japanese patent application JP 2023-163004 filed on September 26, 2023, the content of which is hereby incorporated by reference into this application.

TECHNICAL FIELD

The present invention relates to a water leakage flow rate estimation system.

BACKGROUND ART

As a technique for estimating a water leakage point at which water leakage has occurred in a water supply and sewerage system as a social infrastructure and a pipeline network of a factory, there is a method of surveying a water leakage point using a ground-penetrating radar. Examples of the background art in this field are PTL 1 (JP 2018-40615 A) and PTL 2 (JP 2020-76646 A).

PTL 1 (JP 2018-40615 A) discloses an underground exploration method including: transmitting an electromagnetic wave into the ground at each of a plurality of measurement points and continuously receiving a reflected wave of the electromagnetic wave to acquire data of a reflected wave signal intensity for each two-way travel time at each of the measurement points; generating a set of pieces of the data of the reflected wave signal intensity of the plurality of measurement points for each two-way travel time using the pieces of the data of the reflected wave signal intensity for each two-way travel time at each of the measurement points; evaluating the degree of appearance of reflected wave signal intensity values for each two-way travel time using the set of pieces of the data of the reflected wave signal intensity for each two-way travel time; and determining an underground situation at each of the measurement points based on a result of the evaluation.

In addition, PTL 2 (JP 2020-76646 A) discloses a water leakage sensing method including: acquiring measurement data from a vibration sensor; obtaining an auto-correlation coefficient from the measurement data; extracting a peak position information set including a plurality of peaks of the auto-correlation coefficient; repeating the above processing a plurality of times to acquire a plurality of the extracted peak position information sets; and performing a water leakage determination based on a relationship between the plurality of peak position information sets.

SUMMARY OF INVENTION

TECHNICAL PROBLEM

In the conventional water leakage survey, there is an acoustic leakage survey in which the presence or absence of water leakage and a water leakage point are surveyed using a listening stick. Information regarding a water leakage flow rate is required in order to prioritize repair in determining at which timing the found water leakage point is to be repaired, but the acoustic leakage survey is a personal water leakage survey method depending on the hearing ability of a worker, and it is difficult to estimate the water leakage flow rate by distinguishing weak water leakage sounds.

As a water leakage survey method that is not personal, there is a method of sensing an underground water leakage location based on a difference in moisture content using a ground-penetrating radar. In the technique described in PTL 1, a ground-penetrating radar is used to evaluate the degree of appearance of the reflected wave signal intensity values received by the ground-penetrating radar to determine the underground situation.

An exploration image representing the reflected wave signal intensity is acquired by performing movement on the ground along a sweep direction while emitting the electromagnetic waves into the ground from above the ground and continuously receiving reflected waves together with the emission of the electromagnetic waves. In a case where a cavity is generated due to water leakage, a property that the emitted electromagnetic wave is reflected at an interface between soil and the cavity, and a difference in dielectric constant depending on the amount of water appear as features in the exploration image. Therefore, a water leakage point can be identified by analyzing the exploration image. Since the water leakage point can be identified from the exploration image by the analysis, it is possible to perform a water leakage survey without depending on the ability of a surveyor. However, it is difficult to estimate the water leakage flow rate even if the presence or absence of water leakage can be determined by the difference in dielectric constant in earth.

Meanwhile, there is water leakage survey method using a vibration sensor provided on a pipeline. For example, in the method, the vibration sensor is installed at each location, such as a water control valve of a pipeline network, to measure vibration generated due to water leakage. In the technique described in PTL 2, water leakage in a pipeline around a sensor installation position is determined based on the auto-correlation coefficients of a plurality of measured vibration values acquired by the sensor at different times. At a minute water leakage hole ejection port (hereinafter, water leakage hole) of the pipeline, a unique shock wave (water leakage vibration) is generated in the vicinity of the water leakage hole due to a cavitation phenomenon in which microbubbles repeatedly appear and disappear with a steep pressure fluctuation, and the vibration propagates through the pipeline, water flowing inside the pipeline, and the like. Since the water leakage vibration has a property of continuously occurring regardless of day and night, it is possible to determine whether the water leakage vibration is generated by investigating a matching rate between different times of peak position information of the auto-correlation coefficient of vibration measured by the sensor. However, since the matching rate of the peak position information of the auto-correlation coefficient is determined without depending on the water leakage flow rate, it is difficult to estimate the water leakage flow rate using the technique described in PTL 2.

The present invention has been made in view of the above points, and an object thereof is to suppress labor for surveying a water leakage point and to estimate a water leakage flow rate.

## SOLUTION TO PROBLEM

The representative one of inventions disclosed in this application is outlined as follows. There is provided an water leakage flow rate estimation system comprising an analysis unit and a display unit, wherein the analysis unit includes: an exploration range estimation unit configured to receive a water leakage determination result determined based on sensor data acquired by a sensor, which senses water leakage vibration of a water pipe, an installation position of the sensor, and pipeline information around the installation position as inputs, and output an exploration range indication signal, a water leakage point estimation unit configured to receive the pipeline information and an exploration image obtained by exploration in a range indicated by the exploration range indication signal as inputs, and output an estimated water leakage point, and a water leakage flow rate estimation unit configured to receive the sensor data, the estimated water leakage point output from the water leakage point estimation unit, and a water leakage vibration propagation model obtained by modeling a vibration propagation characteristic of water leakage as inputs, and output an estimated water leakage flow rate, the analysis unit is configured to output the exploration range indication signal, the estimated water leakage point, and the estimated water leakage flow rate, and the display unit is configured to display the exploration range indication signal, the estimated water leakage point, and the estimated water leakage flow rate on a screen.

## ADVANTAGEOUS EFFECTS OF INVENTION

According to one aspect of the present invention, it is possible to suppress the labor for surveying the water leakage point and to estimate the water leakage flow rate. Problems, configurations, and effects other than those described above will be clarified by the following description of embodiments for carrying out the invention.

## BRIEF DESCRIPTION OF THE DRAWINGS

[FIG. 1] FIG. 1 is a diagram illustrating a configuration example of a water leakage flow rate estimation system according to a first embodiment.
[FIG. 2] FIG. 2 is a diagram illustrating an input/output example of the water leakage flow rate estimation system of the first embodiment.
[FIG. 3] FIG. 3 is a diagram illustrating a configuration example of an analysis unit of the first embodiment.
[FIG. 4] FIG. 4 is a diagram illustrating a configuration example of a sensor of the first embodiment.
[FIG. 5] FIG. 5 is a diagram illustrating a configuration example of an underground exploration unit of the first embodiment.
[FIG. 6] FIG. 6 is a diagram illustrating a configuration example of a water leakage vibration propagation model of the first embodiment.
[FIG. 7] FIG. 7 is a diagram illustrating a configuration example of water leakage point vibration characteristic data of the water leakage vibration propagation model of the first embodiment.
[FIG. 8] FIG. 8 is a diagram illustrating a configuration example of water leakage vibration attenuation characteristic data of the water leakage vibration propagation model of the first embodiment.
[FIG. 9] FIG. 9 is a diagram illustrating an example of pipeline information of the first embodiment.
[FIG. 10] FIG. 10 is a diagram illustrating a measured value of vibration and a predicted value of vibration for each water leakage flow rate of the first embodiment.
[FIG. 11] FIG. 11 is a flowchart of processing executed in the first embodiment.
[FIG. 12] FIG. 12 is a diagram illustrating a configuration example of an underground exploration module of the first embodiment.

[FIG. 13] FIG. 13 is a diagram illustrating display examples of a display unit of the first embodiment.
[FIG. 14] FIG. 14 is a diagram illustrating display examples of the display unit of the first embodiment.
[FIG. 15] FIG. 15 is a diagram illustrating display examples of the display unit of the first embodiment.
[FIG. 16] FIG. 16 is a diagram illustrating display examples of the display unit of the first embodiment.
[FIG. 17] FIG. 17 is a diagram illustrating a configuration example of hardware of the sensor of the first embodiment.
[FIG. 18] FIG. 18 is a block diagram illustrating a configuration example of hardware of the analysis unit of the water leakage flow rate estimation system of the first embodiment.
[FIG. 19] FIG. 19 is a diagram illustrating a configuration example of an analysis unit of the second embodiment.
[FIG. 20] FIG. 20 is a flowchart of processing executed in the second embodiment.
[FIG. 21] FIG. 21 is a diagram illustrating a display example of a display unit of the second embodiment.
[FIG. 22] FIG. 22 is a diagram illustrating a configuration example of an analysis unit of the third embodiment.
[FIG. 23] FIG. 23 is a diagram illustrating a configuration example of an analysis unit of the fourth embodiment.
[FIG. 24] FIG. 24 is a diagram illustrating a configuration example of an analysis unit of the fifth embodiment.
[FIG. 25] FIG. 25 is a diagram illustrating an input/output example of a water leakage flow rate estimation system of the sixth embodiment.
[FIG. 26] FIG. 26 is a diagram illustrating a configuration example of an analysis unit of the sixth embodiment.
[FIG. 27] FIG. 27 is a flowchart of processing executed in the sixth embodiment.
[FIG. 28] FIG. 28 is a diagram illustrating a configuration example of an underground exploration module of the seventh embodiment.
[FIG. 29] FIG. 29 is a diagram illustrating a configuration example of an underground exploration module of the eighth embodiment.
[FIG. 30] FIG. 30 is a diagram illustrating a configuration example of a sensor of the ninth embodiment.
[FIG. 31] FIG. 31 is a diagram illustrating a configuration example of a sensor of the tenth embodiment.

DESCRIPTION OF EMBODIMENTS

Hereinafter, a plurality of embodiments of the present invention will be described with reference to the drawings. Each of the embodiments is an example for describing the present invention, and omission and simplification are appropriately made for clarity of description. The present invention can be implemented in various other forms. Unless otherwise specified, each component may be singular or plural. Position, size, shape, range, and the like of each component are illustrated in the drawings and the like in order to facilitate understanding of the invention, and may not represent actual position, size, shape, range, and the like. Therefore, the present invention is not necessarily limited to the position, size, shape, range, and the like disclosed in the drawings. Examples of various types of information are sometimes described with expressions such as "table", "list", and "queue", but various types of information may be expressed in a data structure other than these. For example, various types of information such as "XX table", "XX list", and "XX queue" may be "XX information". In describing identification information, expressions such as "identification information", "identifier", "name", "ID", and "number" are used, but these can be replaced with each other. In all the drawings for describing the embodiments, the same members are denoted by the same reference numerals in principle, and repeated description thereof will be omitted. In addition, in the following embodiments, the components (including element steps and the like) are not necessarily essential unless otherwise specified or considered to be obviously essential in principle. In addition, when the terms "made of A", "consisting of A", "having A", and "including A" are used, other elements are not excluded unless it is specifically stated that only the element is included. Similarly, in the following embodiments, when the shapes, positional relationships, and the like of the components and the like are referred to, the shapes and the like substantially approximate or similar to the shapes and the like are included unless otherwise specified or unless clearly considered in principle.

A water leakage flow rate estimation system relates to, for example, a method of determining the presence or absence of water leakage from a pipeline in a water supply and sewerage system as a social infrastructure or a pipeline network such as a drainage channel installed in a factory, identifying a point where the water leakage occurs (hereinafter referred to as a water leakage point) when there is water leakage, and estimating a water leakage flow rate.

FIRST EMBODIMENT

<Processing Procedure>

FIG. 1 is a diagram illustrating a configuration example of a water leakage flow rate estimation system P01 according to a first embodiment.

As illustrated in FIG. 1, a sensor S01 is installed in each of various valve plugs WO1 on a water pipe WO2. The sensor S01 acquires a water leakage determination result P031 at a predetermined timing, and outputs a location where the sensor S01 is installed as an exploration range indication signal P041 when it is determined that there is water leakage. According to the output exploration range indication signal P041, the water pipe WO2 around the location where the sensor S01 is installed is surveyed using an underground exploration module G01, and a position of the water leakage point WO3 is estimated.

FIG. 2 is a diagram illustrating an input/output example of the water leakage flow rate estimation system P01 of the first embodiment.

As illustrated in FIG. 2, the water leakage flow rate estimation system P01 includes an analysis unit P02 and a display unit M01. The analysis unit P02 receives an exploration image P034 output by the underground exploration module G01, the water leakage determination result P031 output by the sensor S01, sensor data P036 output by the sensor S01, a sensor installation position P032 output by a pipeline management module WM01, and pipeline information P033 output by the pipeline management module WM01 as inputs, and outputs the exploration range indication signal P041, an estimated water leakage point P042, and an estimated water leakage flow rate P043. The exploration range indication signal P041 output from the analysis unit P02 is input to the display unit M01 and the underground exploration module G01. The estimated water leakage point P042 and the estimated water leakage flow rate P043 output from the analysis unit P02 are input to the display unit M01. The display unit M01 outputs display data for displaying the exploration range indication signal P041, the estimated water leakage point P042, and the estimated water leakage flow rate P043 on a screen.

FIG. 3 is a diagram illustrating a configuration example of the analysis unit P02 of the water leakage flow rate estimation system P01 of the first embodiment.

As illustrated in FIG. 3, the analysis unit P02 includes the exploration range estimation unit P021, a water leakage point estimation unit P022, a water leakage flow rate estimation unit P023, and a water leakage vibration propagation model P035.

The exploration range estimation unit P021 receives the water leakage determination result P031, the sensor installation position P032, and the pipeline information P033 as inputs, and outputs the exploration range indication signal P041 indicating a range in which the underground exploration module G01 needs to survey the water pipe WO2 around the sensor installation position P032 of the sensor S01 determined to have water leakage. The sensor installation position P032 is information regarding the sensor installation position P032, and is positioning data in a format such as latitude and longitude using a GPS, a GNSS, or the like, data of positions of the various valve plugs WO1 corresponding to register information such as a map and a pipeline diagram, or the like. The pipeline information P033 is information regarding a pipeline configuration of the water pipe WO2, and is information regarding positions, diameters, materials, and pipe lengths of a water distributing pipe, a water supplying pipe, and a water conveying pipe and positions of the various valve plugs WO1. The pipeline information P033 is indicated in, for example, a piping diagram. The exploration range indication signal P041 is information on an exploration range determined based on sensing performance of the sensor, and is preferably output to be superimposed on the pipeline information P033. The range indicated by the exploration range indication signal P041 may be, for example, a range within a circle having a predetermined radius around the sensor S01 or a range of a predetermined distance of a pipeline extending from the sensor installation position P032. The predetermined length is preferably changed in accordance with a diameter, a material, and a branch configuration of the pipeline around the sensor installation position P032.

The sensor S01 transmits the sensor data P036 and the water leakage determination result P031, obtained by determining the presence or absence of suspected water leakage using the sensor data P036, to the water leakage flow rate estimation system P01 via wireless communication. For example, a water leakage determination unit P025 of the sensor S01 executes water leakage determination processing on the sensor data P036, and generates the water leakage determination result P031 by adding meta-information, such as an identification number of a terminal and the determination date, to the determination result regarding the presence or absence of suspected water leakage. The sensor data P036 is data of the vibration intensity of the water pipe acquired by the sensor S01. The determination result regarding the presence or absence of the suspected water leakage of the water leakage determination result P031 may be a discrete determination result such as the presence or absence of water leakage or a continuous determination result such as a probability value.

The water leakage point estimation unit P022 uses the pipeline information P033 and the exploration image P034 acquired by the underground exploration module G01 as inputs, and outputs the estimated water leakage point P042 on the pipeline. The exploration image P034 is an image in which a reflection intensity of an electromagnetic wave, emitted into the ground by the underground exploration module G01 at each position within the range designated by the exploration range indication signal P041, is indicated by a luminance value. For example, the water leakage point estimation unit P022 detects a cavity and a pool, which are features of a water leakage point, from difference information of the luminance value of the exploration image P034, estimates a position of the water leakage point, and outputs an estimated water leakage point P042 indicating the position of the water leakage point.

The water leakage flow rate estimation unit P023 receives the estimated water leakage point P042 output from the water leakage point estimation unit P022, the water leakage vibration propagation model P035, and the sensor data P036 as inputs, and outputs the estimated water leakage flow rate P043. For example, the water leakage flow rate estimation unit P023 calculates a difference between a predicted value of vibration predicted from a pipeline configuration on a path from the estimated water leakage point P042 to the sensor installation position P032 and a measured value of vibration of the sensor data P036 for each water leakage flow rate, calculates a water leakage flow rate with the smallest calculated difference by a method such as the least squares method, and outputs the calculated water leakage flow rate as the estimated water leakage flow rate P043.

FIG. 4 is a diagram illustrating a configuration example of the sensor S01 of the first embodiment.

The sensor S01 is installed on each of the various valve plugs WO1, a pipe wall, and the like on the water pipe WO2, and incorporates a vibration sensor E03 and a communication module E06 (see FIG. 17). The sensor S01 transmits the water leakage determination result P031, obtained by the sensor S01 determining the presence or absence of suspected water leakage, and the sensor data P036 observed by the vibration sensor to the water leakage flow rate estimation system P01 via wireless communication.

FIG. 5 is a diagram illustrating a configuration example of the underground exploration module G01 of the first embodiment.

The underground exploration module G01 is installed in a hand-push cart, and irradiates the ground with electromagnetic waves while being pressed against and moved on the ground immediately above the buried water pipe WO2 and the water leakage point WO3 by a worker, and measures the reflection intensities of the emitted electromagnetic waves to survey the exploration range. From this measurement result, the exploration image P034 in which the reflection intensities of the emitted electromagnetic waves are indicated by luminance values is analyzed to estimate a water leakage point.

FIG. 6 is a diagram illustrating a configuration example of the water leakage vibration propagation model P035 of the first embodiment.

The water leakage vibration propagation model P035 has definition formula data D01 including water leakage point vibration characteristic data D02 in which a vibration characteristic sensed by the sensor S01 at a predetermined location of the water pipe WO2 is defined when assuming a water leakage point, and water leakage vibration attenuation characteristic data D03 indicating an attenuation characteristic of sensed vibration depending on a distance from the water leakage point.

FIG. 7 is a diagram illustrating a configuration example of the water leakage point vibration characteristic data D02 of the water leakage vibration propagation model P035 illustrated in FIG. 6.

The intensity of vibration generated at the water leakage point depends on the water leakage flow rate, and a frequency characteristic of the vibration is not uniform. Therefore, the water leakage point vibration characteristic data D02 includes vibration intensity data D021 for each of various water leakage flow rates formulated based on vibration data according to the water leakage flow rates acquired by the sensor in the past, and vibration intensity data D022 for each vibration frequency.

FIG. 8 is a diagram illustrating a configuration example of the water leakage vibration attenuation characteristic data D03 of the water leakage vibration propagation model P035 illustrated in FIG. 6.

An attenuation characteristic when vibration generated at a water leakage point is transmitted through the pipeline depends on a pipeline configuration of the water pipe WO2, and a frequency characteristic of the vibration is not uniform. Therefore, the water leakage vibration attenuation characteristic data D03 includes a vibration attenuation coefficient D031 per unit length of the pipeline formulated based on vibration data according to various pipeline configurations acquired by the sensor S01 in the past, and a transmission coefficient D032 per node of the pipeline. The vibration attenuation coefficient D031 per unit length of the pipeline defines, for each vibration frequency, an attenuation characteristic during vibration propagation that changes depending on a pipe type such as a diameter or a material of the pipeline, and includes attenuation coefficient data D0311 for each pipe type and attenuation coefficient data D0312 for each vibration frequency. The transmission coefficient D032 per node of the pipeline includes node transmission coefficient data D0321 for each pipe type in which an attenuation characteristic during transmission of a node that changes depending on a pipe type such as a diameter or a material of the pipeline is defined for each vibration frequency and node transmission coefficient data D0322 for each vibration frequency, the node being a joint of the pipeline such as a branch portion of the pipeline or an installation locations of each of various valve plugs.

Next, an example of a formula for calculating a predicted vibration value using the water leakage vibration propagation model P035 will be described. A water leakage vibration characteristic FV at the sensor installation position P032 at a certain vibration frequency f can be calculated by Formula (1) using the product of a water leakage point vibration characteristic A at the vibration frequency f and a water leakage vibration attenuation characteristic E at the vibration frequency f. The water leakage point vibration characteristic A is determined by a water leakage flow rate L, and a water leakage vibration attenuation characteristic can be determined by a vibration attenuation coefficient $\alpha$ per unit length of the pipeline depending on a pipe type (diameter or material), a transmission coefficient B per node of the pipeline, and a length D of the pipeline.

[Formula 1]

$$FV(L, a, B, d, f) = A(L, f) \cdot E(a, B, d, f) \quad \cdots \text{Formula (1)}$$

Provided that

FV: Water leakage vibration characteristic at sensor installation position
f: Frequency
A: Water leakage point vibration characteristic
L: Water leakage flow rate
E: Water leakage vibration attenuation characteristic
a: Vibration attenuation coefficient per unit length of pipeline
B: Transmission coefficient per node of pipeline
d: Length of pipeline

FIG. 9 is a diagram illustrating an example of the pipeline information P033. Pipeline elements are obtained by dividing the water pipe WO2 of the pipeline information P033 illustrated in FIG. 9 into p1 to p8 for each pipeline type and each pipe diameter, and a term of the vibration attenuation coefficient D031 per unit length of the pipeline of each of the pipeline elements is indicated by $\alpha$, and a term of the transmission coefficient D032 per node of the pipeline is indicated by B for each of nodes v0 to v7 at end points of each of the pipeline elements.

In FIG. 9, for example, when water leakage at the water leakage flow rate L occurs in the pipeline element p1 and water leakage vibration (at a vibration intensity A) is detected by the sensor S01 installed at the node v1 separated from a water leakage point by the distance d1, the water leakage vibration characteristic FV can be expressed by Formula (2).
[Formula 2]

$$FV(L, a_1, B_1, d_1, f) = A(L, f) \cdot E(a_1, B_1, d_1, f) \quad \cdots \text{Formula (2)}$$

In addition, in FIG. 9, for example, when water leakage at the water leakage flow rate L occurs in the pipeline element p1 and water leakage vibration (at a vibration intensity A) is detected by the sensor S01 installed at the node v3, the water leakage vibration characteristic FV can be expressed by Formula (3). Formula (3) is a formula for calculating a predicted vibration value assuming a case where the water leakage vibration of the pipeline element p1 propagates from the pipeline element p1 to the node v1, the pipeline element p2, the node v2, the pipeline element p5, and the node v5 in this order (when pipeline lengths of the propagating pipeline elements p1, p2, and p5 are d1, d2, and d5). Paths through which the vibration is transmitted from the pipeline element p1 to the node v5 also include a path through the pipeline element p6 (the vibration due to leakage at the pipeline element p1 is transmitted from the pipeline element p1 to the node v1, the pipeline element p2, the node v2, the pipeline element p3, the node v3, the pipeline element p7, the node v6, the pipeline element p6, and the node v5). The reason why the predicted vibration value is calculated using a path passing through the pipeline element p5 as a representative path is that a value of a sensing function of the path passing through the pipeline element p5 is larger (that is, the attenuation of vibration is smaller) than a predicted vibration value of the path passing through the pipeline element p6.
[Formula 3]

$$FV(L, a_1, B_1, d_1, a_2, B_2, d_2, a_5, B_5, d_5, f) = A(L, f) \cdot E(a_1, B_1, d_1, f) \cdot E(a_2, B_2, d_2, f) \cdot E(a_5, B_5, d_5, f) \quad \cdots \text{Formula (3)}$$

As described above, in the water pipe WO2 from the sensor installation position P032 to the estimated water leakage point P042, in a case where there are two or more pipe types (diameters or materials), the water leakage vibration characteristic FV at the sensor installation position P032 can be calculated by multiplying the water leakage point vibration characteristic A by each of the water leakage vibration attenuation characteristics E determined depending on the attenuation coefficient $\alpha$, the number of branches B, and the length d of the pipeline of each pipe type portion as in Formula (3).

FIG. 10 is a diagram illustrating a measured value of vibration and a predicted value of vibration for each water leakage flow rate, and is a diagram obtained by comparing a difference between the measured value of vibration of the sensor data P036 and the predicted value of vibration for each water leakage flow rate estimated by the water leakage vibration propagation model P035. In FIG. 10, for example, when the difference between the sensor data P036 and the predicted value at each water leakage flow rate is searched for using the least squares method, it can be seen that the predicted value at the water leakage flow rate of 15 L/min has a vibration characteristic close to the sensor data P036. The water leakage flow rate estimation unit P023 executes processing of searching for a water leakage flow rate most matching the sensor data P036 from among the predicted values for the respective water leakage flow rates assumed from a pipeline configuration up to a water leakage point and the water leakage vibration propagation model P035.

FIG. 11 is a flowchart of processing executed in the first embodiment.

First, the sensor S01 is installed in each of the various valve plugs WO1 of the water pipe WO2 (F01). Thereafter, the sensor installation position P032 and the pipeline information P033 around the sensor installation position P032 are transmitted to the analysis unit P02 of the water leakage flow rate estimation system P01 (F02).

The installed sensor S01 measures vibration of the pipeline at a predetermined timing and detects the vibration at the sensor installation position P032 (F03). Then, the water leakage determination unit P025 in the sensor S01 executes the water leakage determination processing using the sensor data P036 of the detected vibration (F04). The sensor S01 transmits the water leakage determination result P031 to the analysis unit P02 of the water leakage flow rate estimation system P01. The analysis unit P02 may output the water leakage determination result P031 to the display unit M01 (F05).

Thereafter, the sensor S01 determines whether the water leakage determination result P031 indicates that water leakage has been sensed (F06). When the water leakage determination result P031 is a determination result indicating that no water leakage has been sensed (absence of water leakage), the processing returns to step F03 and waits until the next measurement. When the water leakage determination result P031 is a determination result indicating that water leakage has been sensed (presence of water leakage), the exploration range estimation unit P021 calculates a predetermined range around the sensor installation position P032 as an exploration range (F07), and outputs the exploration range indication signal P041 indicating the calculated exploration range to the display unit M01 (F08).

The underground exploration module G01 surveys the water leakage in the range indicated by the exploration range indication signal P041 (F09), and transmits the acquired exploration image P034 to the analysis unit P02 of the water leakage flow rate estimation system P01 (F10).

The water leakage flow rate estimation system P01 analyzes the exploration image P034 transmitted from the underground exploration module G01, and calculates the estimated water leakage point P042 (F11). As a method of analyzing the exploration image P034, it is possible to use, for example, a method of analyzing a luminance value change on the exploration image due to a cavity caused by the water leakage from the exploration image and estimating a water leakage point.

Next, the analysis unit P02 determines whether the water leakage point has been sensed (F12). As a result, in a case where the water leakage point is not found, the processing returns to step F03 and waits until the next measurement. For example, in a case where it is continuously determined that there is water leakage based on the progress of the water leakage determination result P031 of the sensor S01 on and after the next day, underground exploration is performed again. Note that, as in step F16, an upper limit number N (for example, N = 2) of exploration is preferably set, and the repetitive exploration may be suppressed when the estimated water leakage point P042 is not calculated due to erroneous sensing of the sensor S01 due to some environmental vibration. In this case, the exploration range indication signal P041 is preferably transmitted to the display unit M01 as a suspected water leakage range to display the exploration range on the display unit M01 (F17).

On the other hand, in a case where the water leakage point is found in step F12, the analysis unit P02 acquires the sensor data P036 from the sensor S01 (F13). Then, the analysis unit P02 reads the water leakage vibration propagation model P035, and the water leakage flow rate estimation unit P023 compares a predicted value of vibration predicted from a pipeline configuration on a path from the estimated water leakage point P042 to the sensor installation position P032 with a measured value of the vibration of the sensor data P036 to calculate the estimated water leakage flow rate P043 (F14). Then, the water leakage flow rate estimation unit P023 outputs, to the display unit M01, the estimated water leakage point P042 and the estimated water leakage flow rate P043 thus obtained (F15).

The display unit M01 displays the exploration range indication signal P041, the estimated water leakage point P042, and the estimated water leakage flow rate P043, but may display, if necessary, one or more pieces of information of the water leakage determination result P031, the sensor installation position P032, the pipeline information P033, the exploration image P034, and the sensor data P036 which are inputs of the water leakage flow rate estimation system P01.

Data (for example, the water leakage determination result P031, the exploration image P034, and the observation position) may be transferred from the underground exploration module G01 to the analysis unit P02 of the water leakage flow rate estimation system P01 in a wired manner or using an external recording medium such as a USB memory or an SD card. As illustrated in FIG. 12, a wireless communication device N01 may be installed in the underground exploration module G01, and the data may be transmitted from the underground exploration module G01 to the water leakage flow rate estimation system P01 via wireless communication.

<Display Example>

FIGS. 13, 14, 15, and 16 are diagrams illustrating display examples of the display unit M01 of the first embodiment.

A display screen illustrated in each of the drawings displays a display area M02 including a map around the sensor installation position P032 and a situation of the water pipe WO2, and the water leakage determination result P031 of the sensor. The display area M02 displays the sensor installation position P032, the map around the sensor installation position P032, and the pipeline information P033 to be superimposed on a range indicated by the exploration range indication signal P041 output by the exploration range estimation unit P021. A drawing range can be enlarged or reduced by operating an enlargement button M021 or a reduction button M022.

An operator of the underground exploration module G01 views the display screen of the display unit M01 and acquires the exploration image P034 of the range according to the exploration range indication signal P041 around the sensor installation position P032. The estimated water leakage point P042 sensed by the analysis of the acquired exploration image P034 is displayed in the display area M02. The analysis unit P02 calculates the estimated water leakage flow rate P043 from the estimated water leakage point P042, the sensor installation position P032, the sensor data P036, and the pipeline information P033. The calculated estimated water leakage flow rate P043 is displayed and drawn in the display area M02.

According to the screen illustrated in FIG. 13, in addition to the exploration range according to the exploration range indication signal P041 and the water leakage determination result P031 of the sensor S01, when there is water leakage, the estimated water leakage point P042 and the estimated water leakage flow rate P043 can be displayed in association with the pipeline information P033 around the sensor installation position P032 to determine the necessity of repair.

As illustrated in FIG. 14, similarly to the screen illustrated in FIG. 13, in addition to the exploration range according to the exploration range indication signal P041 and the water leakage determination result P031 of the sensor S01, when there is water leakage, the estimated water leakage point P042 and the estimated water leakage flow rate P043 may be displayed in association with the pipeline information P033 around the sensor installation position P032, and a current position M023 of the underground exploration module G01 may be displayed to be superimposed on the exploration range. Therefore, the exploration image P034 can be acquired by operating the underground exploration module G01 while viewing the screen illustrated in FIG. 14.

In addition, as illustrated in FIG. 15, similarly to the screen illustrated in FIG. 13, in addition to the exploration range according to the exploration range indication signal P041 and the water leakage determination result P031 of the sensor S01, when there is water leakage, the estimated water leakage point P042 and the estimated water leakage flow rate P043 may be displayed in association with the pipeline information P033 around the sensor installation position P032, and further, the water leakage determination result P031 of the sensor S01 may be displayed as a probability value (score) of continuous occurrence of water leakage instead of a discrete determination value of the presence or absence of water leakage. Further, like a water leakage probability transition M03, past water leakage determination results or water leakage occurrence probability values may be displayed in time series.

In addition, as illustrated in FIG. 16, similarly to the screen illustrated in FIG. 13, in addition to the exploration range according to the exploration range indication signal P041 and the water leakage determination result P031 of the sensor S01, when there is water leakage, the estimated water leakage point P042 and the estimated water leakage flow rate P043 may be displayed in association with the pipeline information P033 around the sensor installation position P032, and the number of the sensor installation positions P032 determined to have water leakage (the number of water leakage sensing locations) M04 and a rate of completion of exploration of the periphery of the water leakage sensing location (water leakage survey situation) M05 may be displayed to confirm the progress of repair.

<Device Configuration Example>

FIG. 17 is a diagram illustrating a configuration example of hardware of the sensor S01 of the first embodiment.

The sensor S01 includes a microcontroller E01 incorporating a processor such as a CPU (Central Processing Unit) or a GPU (Graphics Processing Unit) and a memory such as a DRAM (Dynamic Random Access Memory), a storage E02, an input device E04 such as a switch, an output device E05 such as an LED or a liquid crystal display panel, a communication module E06 such as an NIC (Network Interface Card), a battery E07, and the vibration sensor E03.

In the microcontroller E01, the processor executes a program stored in the DRAM. The processor executes the predetermined program to operate as functional units that provide various functions of the sensor S01. The storage E02 includes a non-volatile storage area including an HDD (Hard Disk Drive), an SSD (Solid State Drive), and the like and stores the program executed by the microcontroller E01 and data used at the time of executing the program. The input device E04 is configured using a switch, a touch panel, and the like and receives an input from a user. The output device E05 is configured using an LED, a liquid crystal display panel, and the like and displays an operation state of the sensor S01. The communication module E06 controls communication with other devices using a predetermined protocol. The battery E07 supplies power to each unit of the sensor S01. The vibration sensor E03 measures vibration of an object to which the sensor S01 is attached.

FIG. 18 is a block diagram illustrating a configuration example of hardware of the analysis unit P02 of the water leakage flow rate estimation system P01 of the first embodiment.

The analysis unit P02 of the water leakage flow rate estimation system P01 includes a processor A01 such as a CPU (Central Processing Unit) or a GPU (Graphics Processing Unit), a memory A02 such as a ROM or a RAM, a storage A03 such as an HDD and an SSD, an input device A04 such as a keyboard or a mouse, an output device A05 such as a display, and a communication module A06 such as an NIC.

The processor A01 is an arithmetic device that executes a program stored in the memory 102. Each functional unit (for example, the analysis unit P02) of the water leakage flow rate estimation system P01 is achieved by the processor A01 executing various programs. Note that a part of processing performed by the processor A01 executing the program may be executed by another arithmetic device (for example, hardware such as an ASIC and an FPGA).

The memory A02 includes a ROM as a non-volatile storage element and a RAM as a volatile storage element which are accessible by the processor A01. The ROM stores an invariable program (for example, BIOS) and the like. The RAM is a high-speed and volatile storage element such as a dynamic random access memory (DRAM), and temporarily stores a program executed by the processor A01 and data used when the program is executed.

The storage A03 is, for example, a large-capacity and non-volatile storage device such as a magnetic storage device hard disk drive (HDD) or a flash memory (solid state drive). The storage A03 stores data used when the processor A01 executes the program and the program executed by the processor A01. That is, the program is read from the storage A03, loaded into the memory A02, and executed by the processor A01, thereby implementing the respective functions of the water leakage flow rate estimation system P01.

The input device A04 is configured using a keyboard, a mouse, or the like, and is an interface that receives an input from an operator. The output device A05 is configured using a display device, a printer, or the like, and is an interface that outputs an execution result of the program in a format that can be visually recognized by the user. Note that an administrator terminal 6 connected to the water leakage flow rate estimation system P01 via a network may provide the input device A04 and the output device A05. In this case, the water leakage flow rate estimation system P01 may have a function of a web server, and the administrator terminal 6 may access the water leakage flow rate estimation system P01 with a predetermined protocol (for example, http).

The communication module A06 is a network interface device that controls communication with other devices (for example, an edge processing device 2 and a cloud 8) according to the predetermined protocol.

The program executed by the processor A01 is provided to the water leakage flow rate estimation system P01 via a removable medium (CD-ROM, a flash memory, or the like) or a network, and is stored in the non-volatile storage A03 which is a non-transitory storage medium. Therefore, the water leakage flow rate estimation system P01 preferably has an interface that reads data from the removable medium.

The water leakage flow rate estimation system P01 is a computer system configured on physically one computer or on a plurality of computers configured logically or physically, and may operate on a virtual computer constructed on a plurality of physical computer resources. For example, each functional unit may operate on a separate physical or logical computer, or a plurality of functional units may be combined and operate on one physical or logical computer.

<Effects of First embodiment>

As described above, according to the first embodiment, the water leakage is surveyed by the underground exploration module G01, such as a ground-penetrating radar, by limiting the exploration range calculated from the sensor data P036 acquired by the sensor S01, and so that it is possible to reduce personal characteristics of the water leakage point survey and labor for the survey according to the conventional acoustic leakage survey. In addition, in a survey using an exploration radar, an exploration range can be limited to the periphery of a sensor issuing warning, and labor for exploration can be reduced. In addition, since the predicted value of vibration predicted from a configuration of a pipe path between the water leakage point estimated by the underground exploration module G01 and the sensor installation position P032 is compared with the measured value of vibration acquired by the sensor S01, the water leakage flow rate can be estimated, and a determination index that can be used for prioritization of repair can be obtained.

Furthermore, since the water leakage flow rate estimation system P01 acquires the sensor data P036 used for calculation of the estimated water leakage flow rate P043 after the sensor S01 has determined that there is water leakage and the water leakage flow rate estimation system P01 has estimated the water leakage point, it is possible to reduce a chance to transmit data from the sensor S01 to the water leakage flow rate estimation system P01. Therefore, the consumption of the battery of the sensor S01 and the communication cost can be suppressed, and the sensor S01 can be operated for a long period of time.

Furthermore, since pieces of information serving as indexes for determination of necessity of exploration, such as the sensor installation position P032, the pipeline information P033 around the sensor installation position, the exploration range, and the water leakage determination result P031, are displayed on the screen, the necessity of exploration can be determined remotely even if the user is not on the site, and it is possible to easily prepare an exploration plan such as an exploration route.

Furthermore, since the water leakage vibration increases as a distance to a water leakage location decreases and the water leakage flow rate increases, the water leakage flow rate can be estimated by calculating a predicted value of vibration for each water leakage flow rate predicted from the pipe path to the water leakage point estimated from a result of the exploration by the underground exploration module G01 using the water leakage vibration propagation model P035 and comparing a measured value of vibration acquired by the sensor S01 with the predicted value calculated using the water leakage vibration propagation model P035.

SECOND EMBODIMENT

A second embodiment of the present invention will be described. The second embodiment is different from the first embodiment described above in that data, capable of recognizing an exploration range for each water leakage flow rate by exploration range estimation using the sensor data P036 acquired by the sensor S01 and the water leakage vibration propagation model P035 is displayed to provide information for determining the exploration order of the water pipe WO2 to be preferentially explored, and improves the efficiency of the survey of the underground exploration module G01. Note that, in the second embodiment, differences from the first embodiment will be mainly described, and the same configurations and processes as those in the first embodiment will be denoted by the same reference numerals, and description thereof will be omitted.

<Processing Procedure>

FIG. 19 is a diagram illustrating a configuration example of the analysis unit P02 of the water leakage flow rate estimation system P01 of the second embodiment.

As illustrated in FIG. 19, the analysis unit P02 of the second embodiment includes the exploration range estimation unit P021, the water leakage point estimation unit P022, the water leakage flow rate estimation unit P023, and the water leakage vibration propagation model P035. The exploration range estimation unit P021 receives the water leakage determination result P031, the sensor installation position P032, the pipeline information P033, the water leakage vibration propagation model P035, and the sensor data P036 as inputs, and outputs the water pipe WO2 around the sensor installation position P032 of the sensor S01 determined to have water leakage as the exploration range indication signal P041 for designating a survey range of the underground exploration module G01. The water leakage point estimation unit P022 and the water leakage flow rate estimation unit P023 are the same as those in the first embodiment described above.

FIG. 20 is a flowchart of processing executed in the second embodiment.

Steps F01 to F06 are the same as those in the first embodiment described above.

Thereafter, the sensor S01 determines whether the water leakage determination result P031 indicates that water leakage has been sensed (F06). When the water leakage determination result P031 is a determination result indicating that no water leakage has been sensed (absence of water leakage), the processing returns to step F03 and waits until the next measurement. When the water leakage determination result P031 is a determination result indicating that water leakage has been sensed (presence of water leakage), the analysis unit P02 acquires the sensor data P036 from the sensor S01 (F13). The exploration range estimation unit P021 reads the water leakage vibration propagation model P035, calculates a predetermined range around the sensor installation position P032 for each water leakage flow rate as an exploration range (F18), and outputs the exploration range indication signal P041 indicating the calculated exploration range for each water leakage flow rate to the display unit M01 (F19). At the time of execution of the present processing, an actual water leakage point is unknown, and thus, the water leakage flow rate assumed when a water leakage point is assumed on each pipeline around the sensor installation position is output from the relationship between the water leakage vibration propagation model and the sensor data. Note that the range for each water leakage flow rate is calculated in a range using the pipeline elements illustrated in FIG. 9 as units.

Steps F09 to F12 are the same as those in the first embodiment described above.

As a result of step F12, in a case where no water leakage point is found, the processing returns to step F03 and waits until the next measurement. On the other hand, in a case where a water leakage point is found in step F12, the analysis unit P02 reads the water leakage vibration propagation model P035, and the water leakage flow rate estimation unit P023 compares a predicted value of vibration predicted from a pipeline configuration on a path from the estimated water leakage point P042 to the sensor installation position P032 with a measured value of the vibration of the sensor data P036 to calculate the estimated water leakage flow rate P043 (F14). Steps F14 to F17 are the same as those in the first embodiment described above.

The exploration range indication signal P041 of the first embodiment outputs a predetermined exploration range set based on the sensor installation position P032 to the display unit M01, and serves as a guideline for a survey range of the underground exploration module G01. In the second embodiment, the exploration range indication signal P041 is caused to include a position of a pipeline in a range having a high possibility of the water leakage point for each water leakage flow rate using the water leakage vibration propagation model P035 and the sensor data P036, and is output to the display unit M01. In the second embodiment, the range having a high possibility of the water leakage point estimated from the sensor data P036 is displayed to enable narrowing of the survey range of the underground exploration module G01 as compared with that of the first embodiment, and can be used as a determination index for determining an exploration route, for example, by starting exploration from the water pipe WO2 in which the estimated water leakage flow rate P043 is large, and the efficiency of the exploration can be further improved.

<Output Screen>

FIG. 21 is a diagram illustrating a display example of the display unit M01 of the second embodiment.

A display screen illustrated in FIG. 21 displays the display area M02 including a map around the sensor installation position P032 and a situation of the water pipe WO2, and the water leakage determination result P031 of the sensor.

The display area M02 of the second embodiment displays the estimated water leakage flow rate P043 calculated using the sensor data P036 and the water leakage vibration propagation model P035 in the exploration range indicated by the exploration range indication signal P041. A user who handles the underground exploration module G01 can view and use the display screen illustrated in FIG. 21 to contrive the exploration route, for example, by preferentially exploring a location where the estimated water leakage flow rate P043 is large and the influence of water leakage is great, and can perform the exploration more efficiently.

In the second embodiment, not only the estimated water leakage flow rate P043 is displayed to be superimposed on the exploration range, but also an exploration range obtained by narrowing the exploration range indicated by the exploration range indication signal P041 to a range estimated as a water leakage range specified by the user may be displayed.

<Effects of Second Embodiment>

As described above, according to the second embodiment, the exploration range for each water leakage flow rate can be recognized by the exploration range estimation using the sensor data P036 acquired by the sensor S01 and the water leakage vibration propagation model P035. Therefore, for example, it can be used for devising the exploration route, for example, by preferentially exploring a location where the estimated water leakage flow rate P043 is large and the degree of influence of water leakage is large, and the exploration can be performed more efficiently.

THIRD EMBODIMENT

A third embodiment of the present invention will be described. The third embodiment is different from the first embodiment described above in terms of including a pipeline information correction unit P024 configured to handle data (PDF data or image data) obtained by scanning a drawing printed on paper, instead of data (CAD data in a shape file format or the like) in which a pipe type, a pipe diameter, and the like are associated with position coordinate information of the water pipe WO2, for example, as the pipeline information P033. Note that, in the third embodiment, differences from the first embodiment will be mainly described, and the same configurations and processes as those in the first embodiment will be denoted by the same reference numerals, and description thereof will be omitted.

<Processing Procedure>

FIG. 22 is a diagram illustrating a configuration example of the analysis unit P02 of the water leakage flow rate estimation system P01 of the third embodiment.

As illustrated in FIG. 22, the analysis unit P02 of the third embodiment includes the exploration range estimation unit P021, the water leakage point estimation unit P022, the water leakage flow rate estimation unit P023, the pipeline information correction unit P024, and the water leakage vibration propagation model P035. In a case where the pipeline information P033 input to the analysis unit P02 is data (PDF data or image data) obtained by scanning a drawing printed on paper, the pipeline information correction unit P024 extracts information such as a position of a pipeline, a pipe type, and a pipe diameter in an image, and executes processing of converting the information into data in which position coordinate information of the pipeline, the pipe type, and the pipe diameter are associated with each other in a format that can be handled by the water leakage flow rate estimation system P01, and generates corrected pipeline information P044. The corrected pipeline information P044 output from the pipeline information correction unit P024 is input to the exploration range estimation unit P021 and the water leakage point estimation unit P022. The exploration range estimation unit P021 receives the water leakage determination result P031, the sensor installation position P032, and the corrected pipeline information P044 as inputs, and outputs the exploration range indication signal P041 indicating a survey range using the underground exploration module G01. The water leakage point estimation unit P022 receives the corrected pipeline information P044 and the exploration image P034 as inputs, and outputs the estimated water leakage point P042. The water leakage flow rate estimation unit P023 is the same as that of the first embodiment described above.

<Effects of Third Embodiment>

As described above, according to the third embodiment, the exploration range indication signal P041 and the estimated water leakage point P042 can be estimated using a data format obtained by digitizing the pipeline information P033 around the sensor installation position, for example, data obtained by scanning a drawing printed on paper (image data in PDF format or the like) instead of data assigned with coordinate information of a pipeline (CAD data in a shape file format or the like). According to the third embodiment, since the number of types of drawing data that can be handled by the analysis unit P02 increases, information regarding the position of the pipeline can be acquired with higher accuracy, and a pipe path from the sensor installation position P032 to the estimated water leakage point P042 can be acquired as more realistic information, so that the accuracy of water leakage flow rate estimation based on the water leakage vibration propagation model P035 can be improved. Therefore, since the accuracy of the water leakage flow rate estimation is improved, it is easy to determine whether repair is necessary, and the pipeline can be efficiently repaired after exploration.

FOURTH EMBODIMENT

A fourth embodiment of the present invention will be described. The fourth embodiment is different from the first embodiment described above in terms of including a pipeline information correction unit P024 configured to handle a case where the pipeline information P033 and an actual configuration of the water pipe WO2 are different. Note that, in the fourth embodiment, differences from the first embodiment will be mainly described, and the same configurations and processes as those in the first embodiment will be denoted by the same reference numerals, and description thereof will be omitted.

<Processing Procedure>

FIG. 23 is a diagram illustrating a configuration example of the analysis unit P02 of the water leakage flow rate estimation system P01 of the fourth embodiment.

As illustrated in FIG. 23, the analysis unit P02 of the fourth embodiment includes the exploration range estimation unit P021, the water leakage point estimation unit P022, the water leakage flow rate estimation unit P023, the pipeline information correction unit P024, and the water leakage vibration propagation model P035. The pipeline information correction unit P024 extracts information regarding a pipeline from the exploration image P034, updates the pipeline information P033, and generates the corrected pipeline information P044. The corrected pipeline information P044 output from the pipeline information correction unit P024 is input to the exploration range estimation unit P021 and the water leakage point estimation unit P022. The exploration range estimation unit P021 receives the water leakage determination result P031, the sensor installation position P032, and the corrected pipeline information P044 as inputs, and outputs the exploration range indication signal P041 indicating a survey range using the underground exploration module G01. The water leakage point estimation unit P022 receives the corrected pipeline information P044 and the exploration image P034 as inputs, and outputs the estimated water leakage point P042. The water leakage flow rate estimation unit P023 is the same as that of the first embodiment described above.

<Effects of Fourth Embodiment>

As described above, according to the fourth embodiment, the pipeline information P033 around the installation position of the sensor S01 can be updated to accurate information based on the exploration image P034 acquired by the underground exploration module G01. The pipeline information P033 to be input is information at the time of design, and there is a case where a year when a drawing is created is old or a case where a water pipe is laid at a position different from the design. According to the fourth embodiment, since information close to an actual state of a pipe path from the sensor installation position P032 to the estimated water leakage point P042 can be acquired using an actual position of the pipeline obtained from the exploration image P034, the accuracy of water leakage flow rate estimation using the water leakage vibration propagation model P035 can be improved. Therefore, the improvement of the accuracy of the water leakage flow rate estimation makes it easy to determine whether repair is necessary, and the pipeline can be efficiently repaired after exploration.

FIFTH EMBODIMENT

A fifth embodiment of the present invention will be described. The fifth embodiment is a combination of the second embodiment and the fourth embodiment described above, and is different from the second embodiment described above in terms of including the pipeline information correction unit P024 configured to handle a case where the pipeline information P033 and an actual configuration of the water pipe WO2 are different. Note that, in the fifth embodiment, differences from the second embodiment will be mainly described, and the same configurations and processes as those in the first and second embodiments will be denoted by the same reference numerals, and description thereof will be omitted.

<Processing Procedure>

FIG. 24 is a diagram illustrating a configuration example of the analysis unit P02 of the water leakage flow rate estimation system P01 of the fifth embodiment.

As illustrated in FIG. 24, the analysis unit P02 of the fifth embodiment includes the exploration range estimation unit P021, the water leakage point estimation unit P022, the water leakage flow rate estimation unit P023, the pipeline information correction unit P024, and the water leakage vibration propagation model P035. The pipeline information correction unit P024 extracts information regarding a pipeline from the exploration image P034, updates the pipeline information P033, and generates the corrected pipeline information P044. The corrected pipeline information P044 output from the pipeline information correction unit P024 is input to the exploration range estimation unit P021 and the water leakage point estimation unit P022. The exploration range estimation unit P021 receives the water leakage determination result P031, the sensor installation position P032, the corrected pipeline information P044, the water leakage vibration propagation model P035, and the sensor data P036 as inputs, and outputs the exploration range indication signal P041 indicating a survey range using the underground exploration module G01. The water leakage point estimation unit P022 receives the corrected pipeline information P044 and the exploration image P034 as inputs, and outputs the estimated water leakage point P042. The water leakage flow rate estimation unit P023 is the same as that of the first embodiment described above.

<Effects of Fifth Embodiment>

As described above, according to the fifth embodiment, in addition to the effects of the second embodiment, the pipeline information P033 around the sensor installation position can be updated to accurate information based on the exploration image P034 acquired by the underground exploration module G01.

SIXTH EMBODIMENT

A sixth embodiment of the present invention will be described. The sixth embodiment is different from the first embodiment described above in that the water leakage determination processing executed by the water leakage determination unit in the sensor S01 is executed by the analysis unit P02 of the water leakage flow rate estimation system P01. Note that, in the sixth embodiment, differences from the first embodiment will be mainly described, and the same configurations and processes as those in the first embodiment will be denoted by the same reference numerals, and description thereof will be omitted.

<Processing Procedure>

FIG. 25 is a diagram illustrating an input/output example of the water leakage flow rate estimation system P01 of the sixth embodiment.

As illustrated in FIG. 25, the water leakage flow rate estimation system P01 of the sixth embodiment includes the analysis unit P02 and the display unit M01. The analysis unit P02 receives the exploration image P034 output by the underground exploration module G01, the sensor data P036 output by the sensor S01, the sensor installation position P032 output by the pipeline management module WM01, and the pipeline information P033 output by the pipeline management module WM01 as inputs, and outputs the exploration range indication signal P041, the estimated water leakage point P042, and the estimated water leakage flow rate P043.

FIG. 26 is a diagram illustrating a configuration example of the analysis unit P02 of the water leakage flow rate estimation system P01 of the sixth embodiment.

As illustrated in FIG. 26, the analysis unit P02 includes the exploration range estimation unit P021, the water leakage point estimation unit P022, the water leakage flow rate estimation unit P023, and the water leakage determination unit P025. The water leakage determination unit P025 executes the water leakage determination processing on the sensor data P036 output from the sensor S01, and generates the water leakage determination result P031 by adding meta-information such as an identification number of a terminal and the determination date to a determination result regarding the presence or absence of suspected water leakage. The exploration range estimation unit P021 receives the water leakage determination result P031 output from the water leakage determination unit P025, the sensor installation position P032, and the pipeline information P033 as inputs, and outputs the exploration range indication signal P041 indicating a range in which the underground exploration module G01 needs to survey the water pipe WO2 around the sensor installation position P032 of the sensor S01 determined to have water leakage. The water leakage point estimation unit P022 and the water leakage flow rate estimation unit P023 are the same as those in the first embodiment described above.

In the first embodiment, the sensor S01 side executes the water leakage determination processing and transmits the water leakage determination result P031 to the water leakage flow rate estimation system P01. However, in the sixth embodiment, since the water leakage flow rate estimation system P01 executes the water leakage determination processing, the sensor S01 transmits the sensor data P036 to the water leakage flow rate estimation system P01 without executing the water leakage determination processing.

FIG. 27 is a flowchart of processing executed in the sixth embodiment.

Steps F01 to F03 are the same as those in the first embodiment described above.

Thereafter, the sensor S01 transmits the sensor data P036 to the analysis unit P02 (F13). The water leakage determination unit P025 of the water leakage flow rate estimation system P01 executes the water leakage determination processing on the sensor data P036 output from the sensor S01 and generates the water leakage determination result P031 (F20). Then, the water leakage determination unit P025 outputs the water leakage determination result P031 to the display unit M01 (F21).

Steps F06 to F12 are the same as those in the first embodiment described above.

As a result of step F12, in a case where no water leakage point is found, the processing returns to step F03 and waits until the next measurement. On the other hand, in a case where a water leakage point is found in step F12, the analysis unit P02 reads the water leakage vibration propagation model P035, and the water leakage flow rate estimation unit P023 compares a predicted value of vibration predicted from a pipeline configuration on a path from the estimated water leakage point P042 to the sensor installation position P032 with a measured value of the vibration of the sensor data P036 to calculate the estimated water leakage flow rate P043 (F14). Steps F14 to F17 are the same as those in the first embodiment described above.

<Effects of Sixth Embodiment>

As described above, according to the sixth embodiment, since the water leakage determination processing using the sensor data P036 is executed in the water leakage flow rate estimation system P01, it is easy to implement the determination processing using a determination processing method that has been difficult with a limited computer resource of the sensor S01, for example, machine learning for performing the water leakage determination with reference to a lot of data acquired in the past. In addition, it is not necessary to collect the sensor S01 and update an internal program (for example, firmware) in order to update the determination processing method, so that the operation of the sensor S01 becomes easy.

SEVENTH EMBODIMENT

A seventh embodiment of the present invention will be described. The seventh embodiment is different from the first embodiment described above in that an underground exploration module G02 has an automatic operation function and achieves a remote survey. Note that, in the seventh embodiment, differences from the first embodiment will be mainly described, and the same configurations and processes as those in the first embodiment will be denoted by the same reference numerals, and description thereof will be omitted.

FIG. 28 is a diagram illustrating a configuration example of the underground exploration module G02 of the seventh embodiment.

Differently from the hand-push underground exploration module G01 of the first embodiment, the underground exploration module G02 of the seventh embodiment has the automatic operation function and the wireless communication device N01, and automatically surveys a survey range according to the exploration range indication signal P041, and transmits the acquired exploration image P034 and position information of an exploration device to the water leakage flow rate estimation system P01 via wireless communication. Therefore, as in the first embodiment, a worker can achieve the survey remotely without pushing a cart on which the underground exploration module G01 is installed.

<Effects of Seventh Embodiment>

As described above, according to the seventh embodiment, a surveyor can perform the survey remotely without going to the site and moving the exploration device, labor for the survey can be reduced.

## EIGHTH EMBODIMENT

An eighth embodiment of the present invention will be described. The eighth embodiment is different from the first embodiment described above in that an underground exploration module is mounted on an exploration vehicle G03. Note that, in the eighth embodiment, differences from the first embodiment will be mainly described, and the same configurations and processes as those in the first embodiment will be denoted by the same reference numerals, and description thereof will be omitted.
FIG. 29 is a diagram illustrating a configuration example of the underground exploration module of the eighth embodiment.
Differently from the hand-push underground exploration module G01 of the first embodiment, the underground exploration module of the eighth embodiment is mounted on the exploration vehicle G03.

### <Effects of Eighth Embodiment>

As described above, since a large exploration device mounted on the exploration vehicle G03 can be used according to the eighth embodiment, it is possible to explore a wide range of the ground that can be acquired by one movement and to improve the exploration speed. Therefore, the exploration can be performed more efficiently.

## NINTH EMBODIMENT

### <Processing Procedure>

A ninth embodiment of the present invention will be described. The ninth embodiment is different from the first embodiment described above in that a wireless communication device S02 is provided separately from the sensor S01. Note that, in the ninth embodiment, differences from the first embodiment will be mainly described, and the same configurations and processes as those in the first embodiment will be denoted by the same reference numerals, and description thereof will be omitted.
FIG. 30 is a diagram illustrating a configuration example of the sensor S01 of the ninth embodiment.
The sensor S01 of the ninth embodiment is provided with the wireless communication device S02 separately from the sensor S01, and the sensor S01 and the wireless communication device S02 are connected by a cable. The wireless communication device S02 is installed at a place closer to the ground than the sensor S01. For example, in a case where the various valve plugs WO1 or the water pipe WO2 are located in a deep place in the ground, or in a case where the various valve plugs WO1 are made of a material that hardly allows communication, the wireless communication device S02 is installed in the place close to the ground, so that stable communication can be performed.

### <Effects of Ninth Embodiment>

As described above, since the wireless communication device S02 can be installed in the place that is closer to the ground and facilitates stable communication according to the configuration of the ninth embodiment, the stable communication can be performed regardless of the depth of a valve plug or a buried pipeline. Therefore, since the water leakage determination result P031 can be transmitted without delay regardless of an installation place of the sensor S01, it is possible to perform remote monitoring in real time and to quickly perform exploration when water leakage occurs.

## TENTH EMBODIMENT

A tenth embodiment of the present invention will be described. The tenth embodiment is different from the first embodiment described above in that the sensor S01 is installed inside the water pipe WO2. Note that, in the tenth embodiment, differences from the first embodiment will be mainly described, and the same configurations and processes as those in the first embodiment will be denoted by the same reference numerals, and description thereof will be omitted.
FIG. 31 is a diagram illustrating a configuration example of the sensor S01 of the tenth embodiment.
The sensor S01 of the tenth embodiment is installed inside the water pipe WO2. In the water pipe WO2 having a large diameter, a distance at which water leakage can be sensed is shortened if a method of installing the sensor S01 at the valve plug WO1 of the first embodiment is used. On the other hand, since vibration transmitted through water in a pipe has a property of reaching far, it is easy to sense the vibration even in the water pipe WO2 having a large diameter when the sensor S01 is installed in the water pipe WO2.

<Effects of Tenth Embodiment>

As described above, since the sensor S01 is disposed inside the water pipe WO2 according to the configuration of the tenth embodiment, the vibration can be easily sensed even in a pipeline having a large diameter. Therefore, it is possible to reduce overlooking of water leakage vibration in the pipeline having a large diameter.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, processing modules, and processing means, for all or a part of them, may be implemented by hardware: for example, by designing an integrated circuit, and may be implemented by software, which means that a processor interprets and executes programs providing the functions.

The information of programs, tables, and files to implement the functions may be stored in a storage device such as a memory, a hard disk drive, or an SSD (a Solid State Drive), or a storage medium such as an IC card, or an SD card.

The drawings illustrate control lines and information lines as considered necessary for explanation but do not illustrate all control lines or information lines in the products. It can be considered that almost of all components are actually interconnected.

## Claims

1. A water leakage flow rate estimation system comprising an analysis unit and a display unit, wherein the analysis unit includes:

    an exploration range estimation unit configured to receive a water leakage determination result determined based on sensor data acquired by a sensor, which senses water leakage vibration of a water pipe, an installation position of the sensor, and pipeline information around the installation position as inputs, and output an exploration range indication signal,
    a water leakage point estimation unit configured to receive the pipeline information and an exploration image obtained by exploration in a range indicated by the exploration range indication signal as inputs, and output an estimated water leakage point, and
    a water leakage flow rate estimation unit configured to receive the sensor data, the estimated water leakage point output from the water leakage point estimation unit, and a water leakage vibration propagation model obtained by modeling a vibration propagation characteristic of water leakage as inputs, and output an estimated water leakage flow rate,
    the analysis unit is configured to output the exploration range indication signal, the estimated water leakage point, and the estimated water leakage flow rate, and
    the display unit is configured to display the exploration range indication signal, the estimated water leakage point, and the estimated water leakage flow rate on a screen.

2. The water leakage flow rate estimation system according to claim 1, wherein the exploration range estimation unit configured to receive the water leakage determination result, the installation position of the sensor, the pipeline information around the installation position, the water leakage vibration propagation model, and the sensor data as inputs, and output the exploration range indication signal associated with the estimated water leakage flow rate.

3. The water leakage flow rate estimation system according to claim 1, further comprising

    a pipeline information correction unit configured to correct input pipeline information and outputs corrected pipeline information,
    wherein the pipeline information input to the exploration range estimation unit is the corrected pipeline information, and
    the pipeline information input to the water leakage point estimation unit is the corrected pipeline information.

4. The water leakage flow rate estimation system according to claim 3, wherein the pipeline information correction unit is configured to correct the input pipeline information based on the exploration image and outputs the corrected pipeline information.

**5.** The water leakage flow rate estimation system according to claim 1, further comprising

a water leakage determination unit configured to receive the sensor data as an input, and output the water leakage determination result,
wherein the water leakage determination result output by the water leakage determination unit is input to the exploration range estimation unit.

**6.** The water leakage flow rate estimation system according to claim 1, wherein
the water leakage vibration propagation model includes water leakage point vibration characteristic data indicating a characteristic of vibration sensed at a predetermined location of the water pipe and water leakage vibration attenuation characteristic data indicating an attenuation characteristic of vibration sensed depending on a distance from a water leakage point.

**7.** The water leakage flow rate estimation system according to claim 6, wherein
the water leakage point vibration characteristic data includes vibration intensity data for each water leakage flow rate formulated based on vibration data corresponding to the water leakage flow rate, and vibration intensity data for each vibration frequency.

**8.** The water leakage flow rate estimation system according to claim 6, wherein

the water leakage vibration attenuation characteristic data includes a vibration attenuation coefficient per unit length of a pipeline and a transmission coefficient per node of the pipeline,
the vibration attenuation coefficient per unit length of the pipeline includes attenuation coefficient data for each pipe type in which an attenuation characteristic during vibration propagation that varies depending on the pipe type such as a diameter and a material of the pipeline is determined for each of vibration frequencies and attenuation coefficient data for each of the vibration frequencies, and
the transmission coefficient per node of the pipeline includes node transmission coefficient data for each pipe type in which an attenuation characteristic during transmission of a node that is a joint of the pipeline is defined for each of the vibration frequencies, and node transmission coefficient data for each of the vibration frequencies.

**9.** The water leakage flow rate estimation system according to claim 1, further comprising

a display unit that displays data output from the exploration range estimation unit, the water leakage point estimation unit, and the water leakage flow rate estimation unit,
wherein the display unit is configured to display, on the screen, identification information for identifying the sensor, a water leakage determination date which is a date when the sensor determines that there is water leakage, the water leakage determination result, a map around the installation position of the sensor, a pipeline diagram around the installation position of the sensor, an exploration range indicated by the exploration range indication signal, the estimated water leakage point, and the estimated water leakage flow rate.

**10.** The water leakage flow rate estimation system according to claim 9, wherein
the display unit is further configured to display a current location of an exploration device on the screen.

**11.** The water leakage flow rate estimation system according to claim 9, wherein
the display unit is further configured to display a temporal change of a water leakage probability on the screen.

**12.** The water leakage flow rate estimation system according to claim 9, wherein
the display unit is further configured to display, on the screen, a number of sensors determined to have water leakage, and a proportion of sensors for which surrounding exploration has been completed among the sensors determined to have water leakage.

**13.** The water leakage flow rate estimation system according to claim 9, wherein
the display unit is further configured to display, on the screen, the estimated water leakage flow rate to be superimposed on the exploration range indicated by the exploration range indication signal.

**14.** A water leakage flow rate estimation method executed by a water leakage flow rate estimation system,

the water leakage flow rate estimation system including an analysis unit and a display unit,
the water leakage flow rate estimation method comprising:

an exploration range estimation process, performed by the analysis unit, of receiving a water leakage determination result determined based on sensor data acquired by a sensor, which senses water leakage vibration of a water pipe, an installation position of the sensor, and pipeline information around the installation position as inputs and outputting an exploration range indication signal,
a water leakage point estimation process, performed by the analysis unit, of receiving the pipeline information and an exploration image obtained by exploration in a range indicated by the exploration range indication signal as inputs and outputting an estimated water leakage point,
a water leakage flow rate estimation process, performed by the analysis unit, of receiving the sensor data, the estimated water leakage point output in the water leakage point estimation process, and a water leakage vibration propagation model obtained by modeling a vibration propagation characteristic of water leakage as inputs and outputting an estimated water leakage flow rate,
an output process, performed by the analysis unit, of outputting the exploration range indication signal, the estimated water leakage point, and the estimated water leakage flow rate, and
a display process, performed by the display unit, of displaying the exploration range indication signal, the estimated water leakage point, and the estimated water leakage flow rate on a screen.

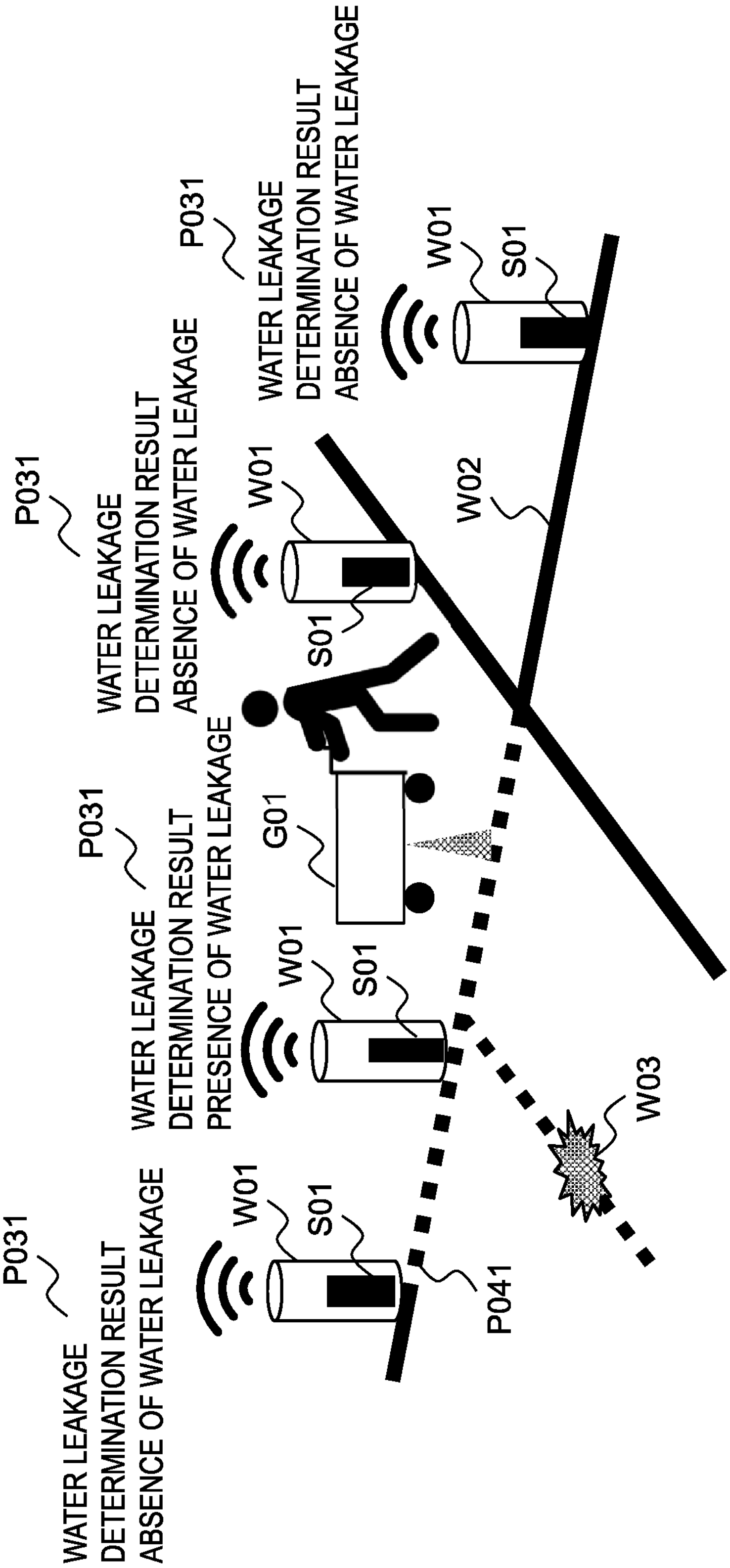
WATER LEAKAGE
DETERMINATION RESULT
ABSENCE OF WATER LEAKAGE
P031
W01
S01
P041
WATER LEAKAGE
DETERMINATION RESULT
PRESENCE OF WATER LEAKAGE
P031
W01
S01
W03
G01
WATER LEAKAGE
DETERMINATION RESULT
ABSENCE OF WATER LEAKAGE
P031
W01
S01
W02
WATER LEAKAGE
DETERMINATION RESULT
ABSENCE OF WATER LEAKAGE
P031
W01
S01

*Fig. 1*

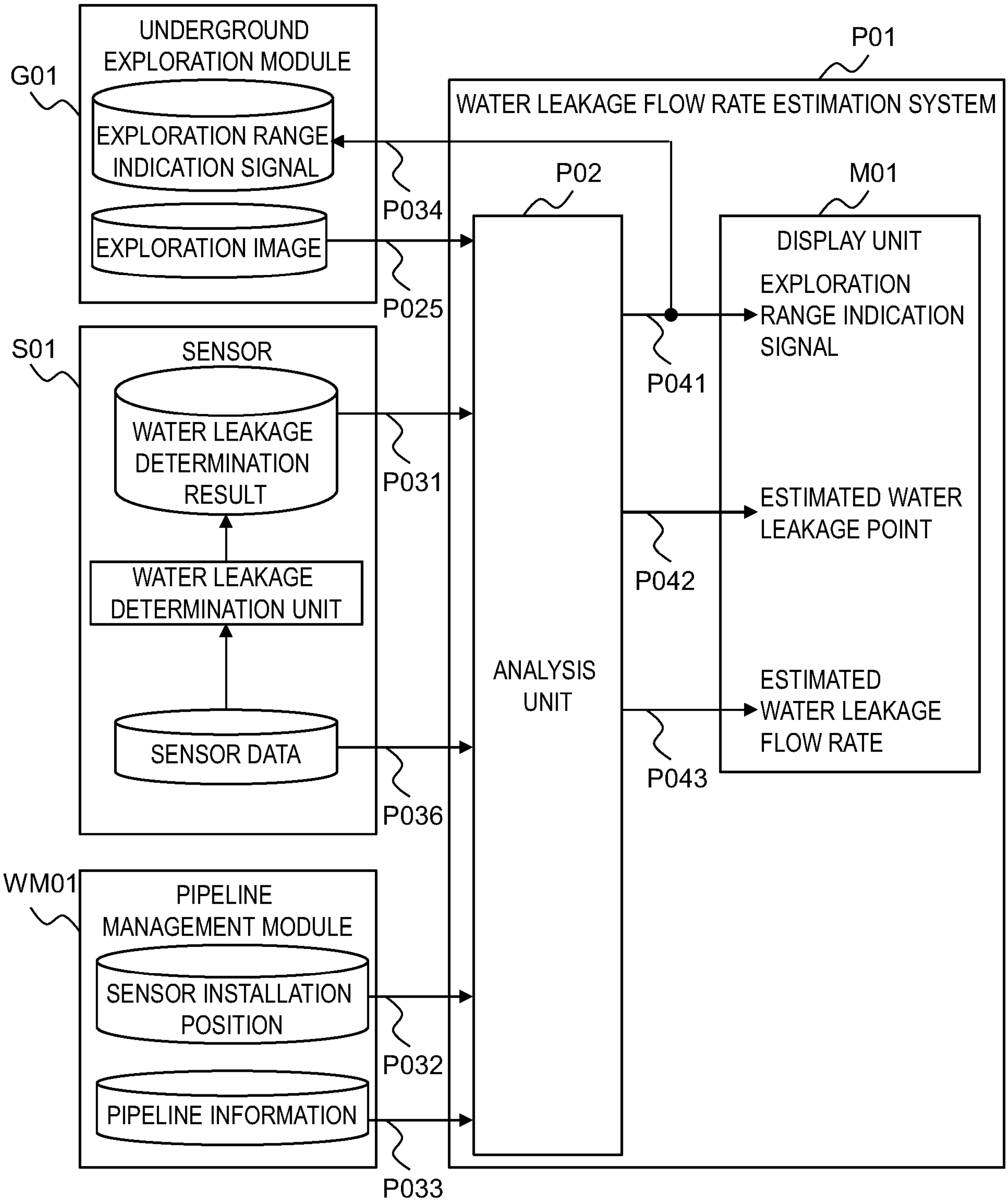
UNDERGROUND EXPLORATION MODULE
G01
EXPLORATION RANGE INDICATION SIGNAL
EXPLORATION IMAGE
P01
WATER LEAKAGE FLOW RATE ESTIMATION SYSTEM
P034
P02
M01
DISPLAY UNIT
P025
EXPLORATION RANGE INDICATION SIGNAL
S01
SENSOR
P041
WATER LEAKAGE DETERMINATION RESULT
P031
ESTIMATED WATER LEAKAGE POINT
P042
WATER LEAKAGE DETERMINATION UNIT
ANALYSIS UNIT
ESTIMATED WATER LEAKAGE FLOW RATE
SENSOR DATA
P043
P036
WM01
PIPELINE MANAGEMENT MODULE
SENSOR INSTALLATION POSITION
P032
PIPELINE INFORMATION
P033

*Fig. 2*

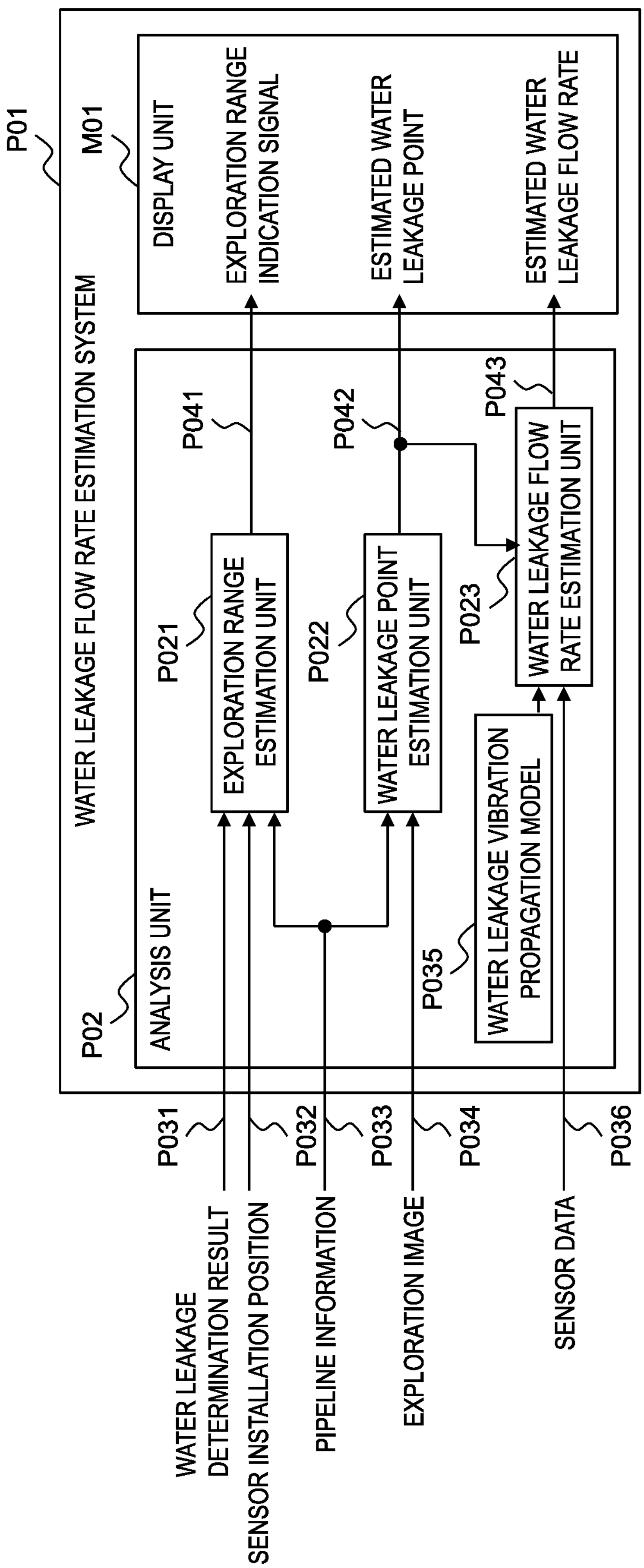
P01
WATER LEAKAGE FLOW RATE ESTIMATION SYSTEM
M01
DISPLAY UNIT
EXPLORATION RANGE INDICATION SIGNAL
ESTIMATED WATER LEAKAGE POINT
ESTIMATED WATER LEAKAGE FLOW RATE
P02
ANALYSIS UNIT
P041
P042
P043
P021
EXPLORATION RANGE ESTIMATION UNIT
P022
WATER LEAKAGE POINT ESTIMATION UNIT
P023
WATER LEAKAGE FLOW RATE ESTIMATION UNIT
P035
WATER LEAKAGE VIBRATION PROPAGATION MODEL
P031
P032
P033
P034
P036
WATER LEAKAGE DETERMINATION RESULT
SENSOR INSTALLATION POSITION
PIPELINE INFORMATION
EXPLORATION IMAGE
SENSOR DATA

*Fig. 3*

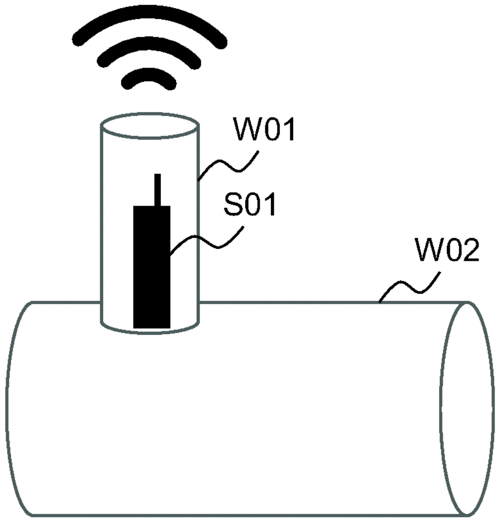


Fig. 4

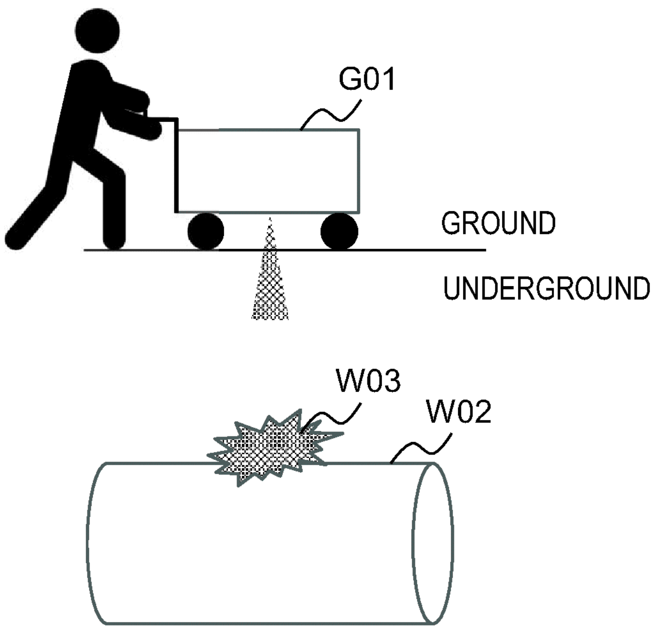


Fig. 5

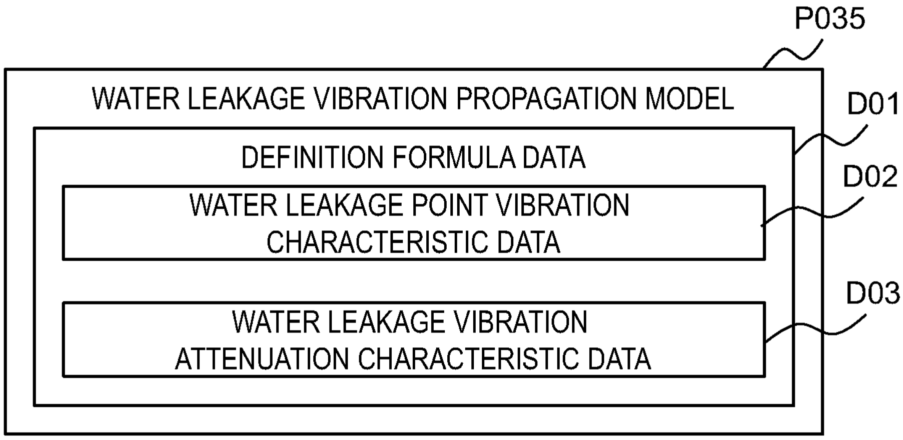


Fig. 6

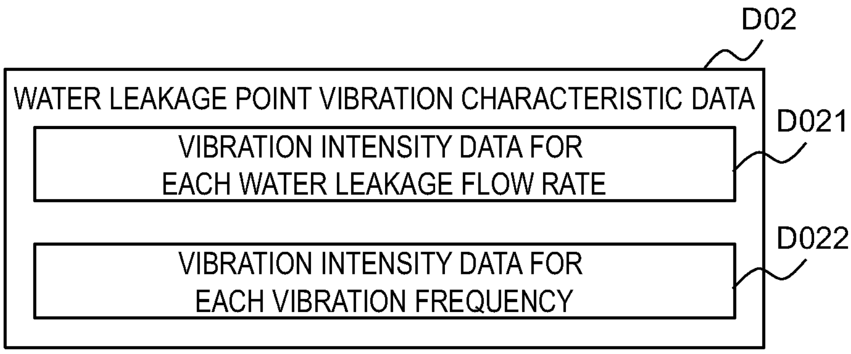


Fig. 7

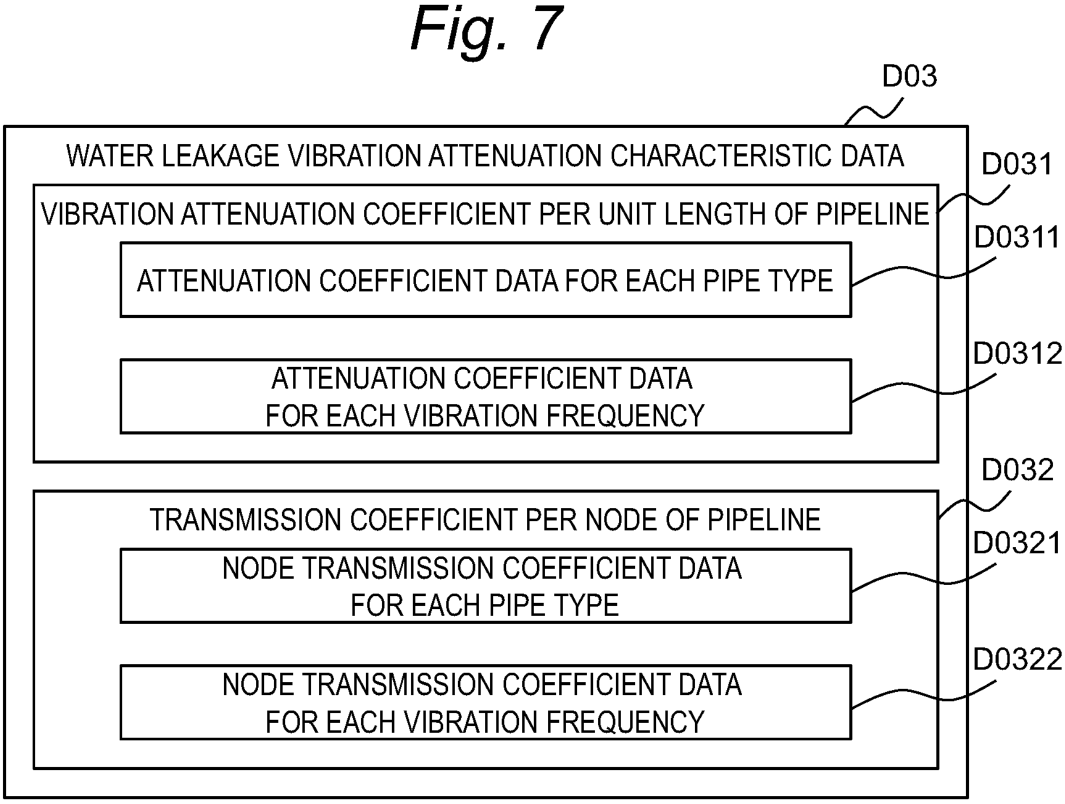


Fig. 8

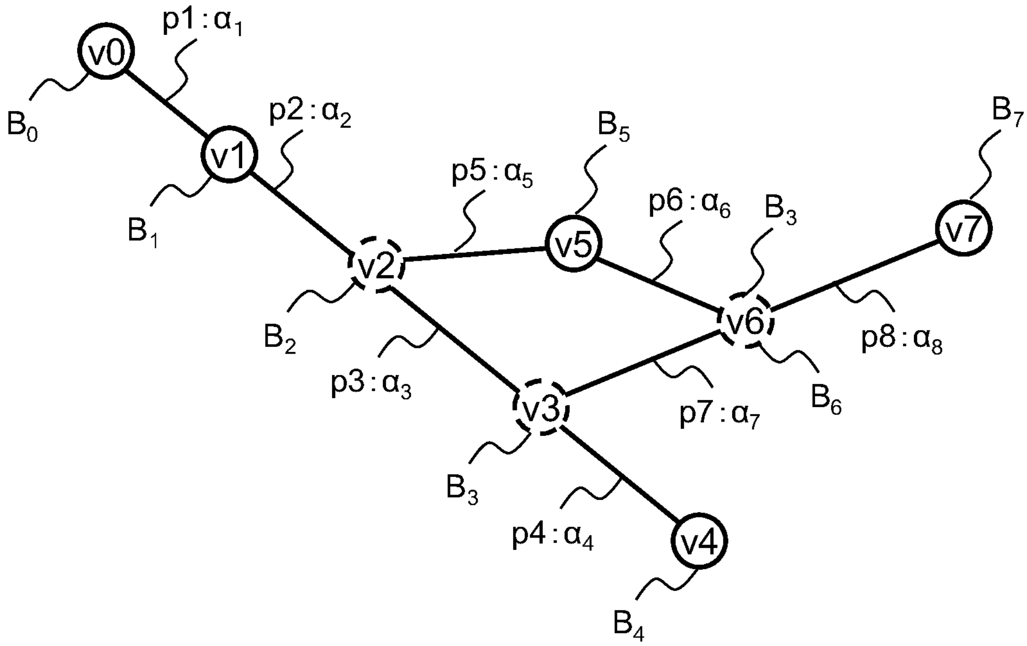
v0
v1
v2
v3
v4
v5
v6
v7
p1 : α1
p2 : α2
p3 : α3
p4 : α4
p5 : α5
p6 : α6
p7 : α7
p8 : α8
B0
B1
B2
B3
B3
B4
B5
B6
B7

Fig. 9

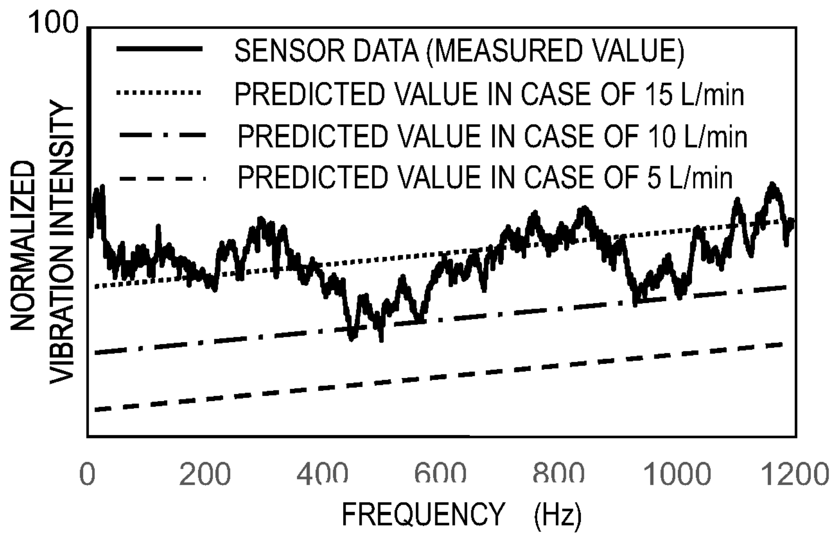
100
NORMALIZED VIBRATION INTENSITY
SENSOR DATA (MEASURED VALUE)
PREDICTED VALUE IN CASE OF 15 L/min
PREDICTED VALUE IN CASE OF 10 L/min
PREDICTED VALUE IN CASE OF 5 L/min
0
200
400
600
800
1000
1200
FREQUENCY (Hz)

Fig. 10

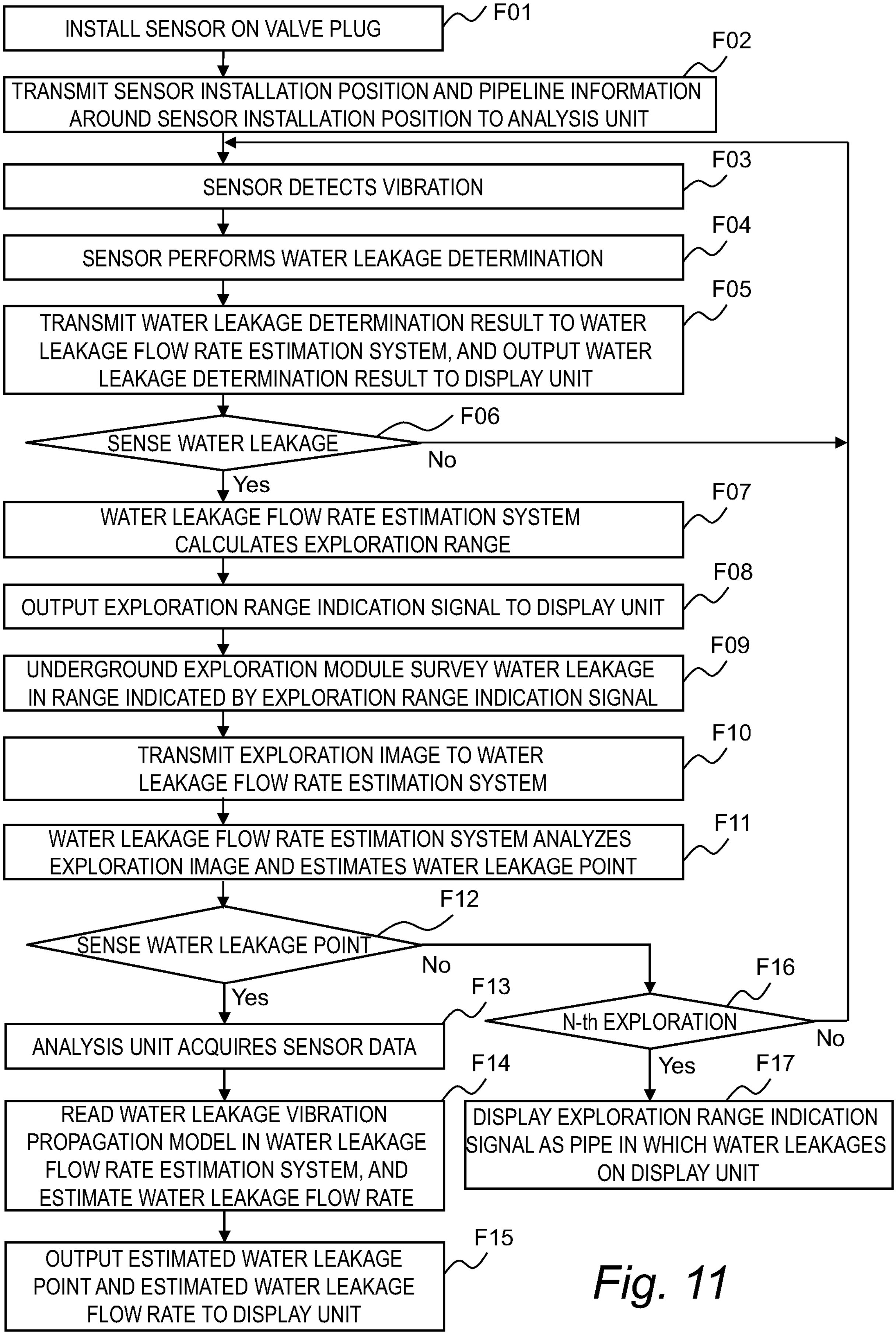
INSTALL SENSOR ON VALVE PLUG
F01
TRANSMIT SENSOR INSTALLATION POSITION AND PIPELINE INFORMATION AROUND SENSOR INSTALLATION POSITION TO ANALYSIS UNIT
F02
SENSOR DETECTS VIBRATION
F03
SENSOR PERFORMS WATER LEAKAGE DETERMINATION
F04
TRANSMIT WATER LEAKAGE DETERMINATION RESULT TO WATER LEAKAGE FLOW RATE ESTIMATION SYSTEM, AND OUTPUT WATER LEAKAGE DETERMINATION RESULT TO DISPLAY UNIT
F05
SENSE WATER LEAKAGE
F06
No
Yes
WATER LEAKAGE FLOW RATE ESTIMATION SYSTEM CALCULATES EXPLORATION RANGE
F07
OUTPUT EXPLORATION RANGE INDICATION SIGNAL TO DISPLAY UNIT
F08
UNDERGROUND EXPLORATION MODULE SURVEY WATER LEAKAGE IN RANGE INDICATED BY EXPLORATION RANGE INDICATION SIGNAL
F09
TRANSMIT EXPLORATION IMAGE TO WATER LEAKAGE FLOW RATE ESTIMATION SYSTEM
F10
WATER LEAKAGE FLOW RATE ESTIMATION SYSTEM ANALYZES EXPLORATION IMAGE AND ESTIMATES WATER LEAKAGE POINT
F11
SENSE WATER LEAKAGE POINT
F12
No
Yes
ANALYSIS UNIT ACQUIRES SENSOR DATA
F13
N-th EXPLORATION
F16
No
Yes
READ WATER LEAKAGE VIBRATION PROPAGATION MODEL IN WATER LEAKAGE FLOW RATE ESTIMATION SYSTEM, AND ESTIMATE WATER LEAKAGE FLOW RATE
F14
DISPLAY EXPLORATION RANGE INDICATION SIGNAL AS PIPE IN WHICH WATER LEAKAGES ON DISPLAY UNIT
F17
OUTPUT ESTIMATED WATER LEAKAGE POINT AND ESTIMATED WATER LEAKAGE FLOW RATE TO DISPLAY UNIT
F15

*Fig. 11*

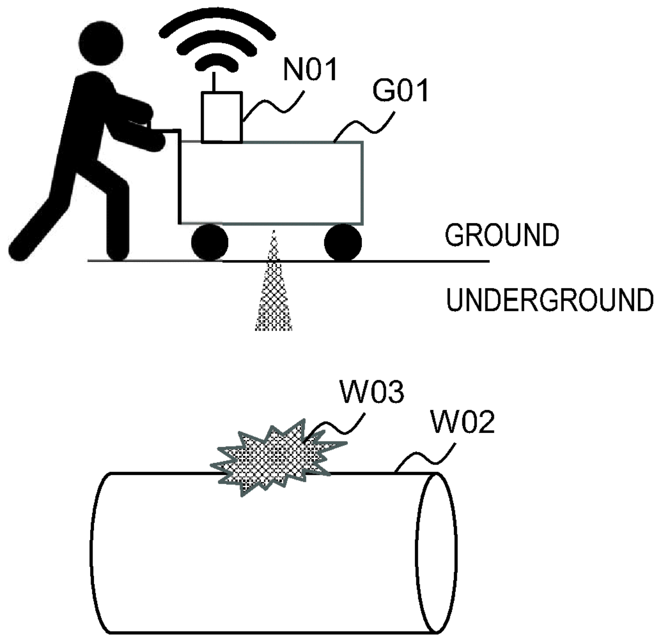


Fig. 12

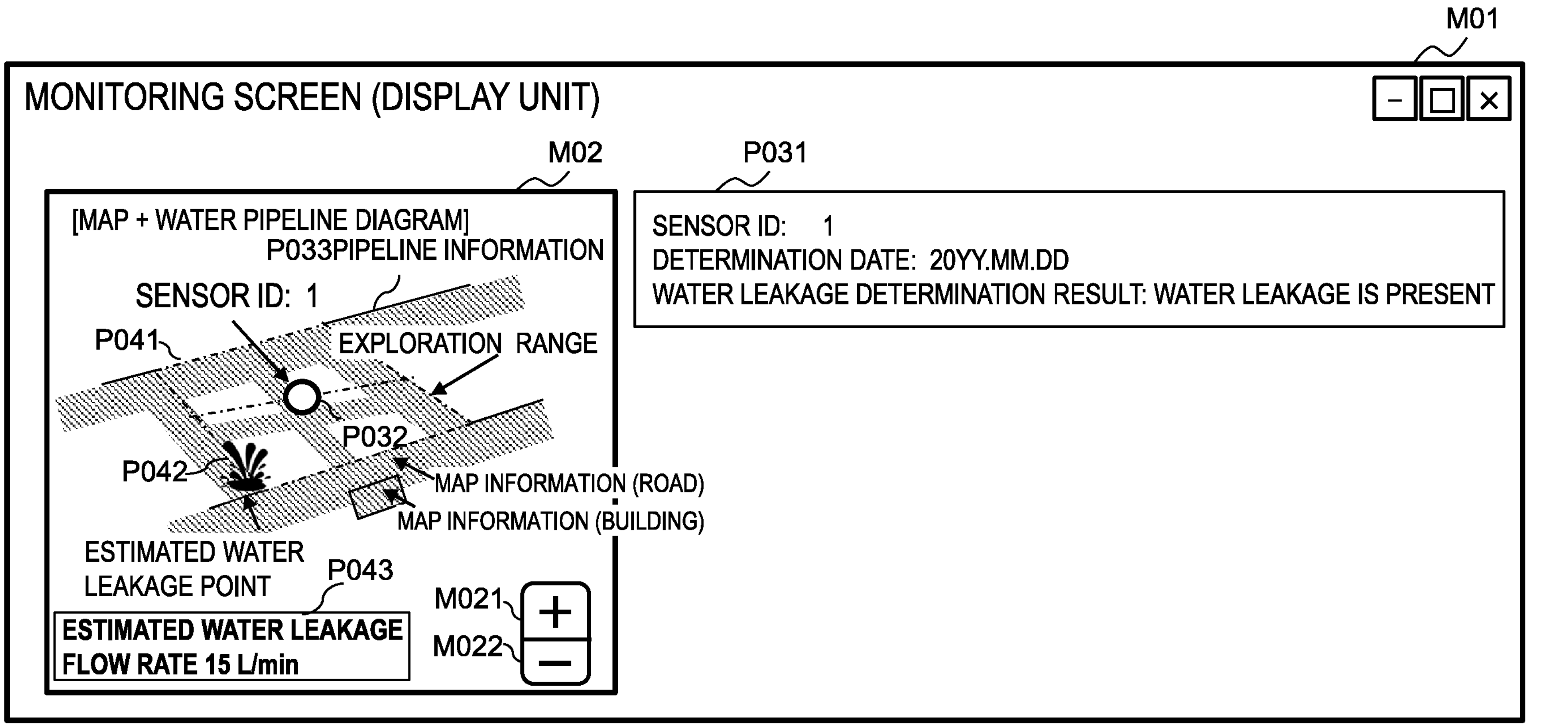
M01
MONITORING SCREEN (DISPLAY UNIT)
M02
P031
[MAP + WATER PIPELINE DIAGRAM]
P033PIPELINE INFORMATION
SENSOR ID: 1
P041
EXPLORATION RANGE
P032
P042
MAP INFORMATION (ROAD)
MAP INFORMATION (BUILDING)
ESTIMATED WATER
LEAKAGE POINT
P043
ESTIMATED WATER LEAKAGE
FLOW RATE 15 L/min
M021
M022
SENSOR ID: 1
DETERMINATION DATE: 20YY.MM.DD
WATER LEAKAGE DETERMINATION RESULT: WATER LEAKAGE IS PRESENT

Fig. 13

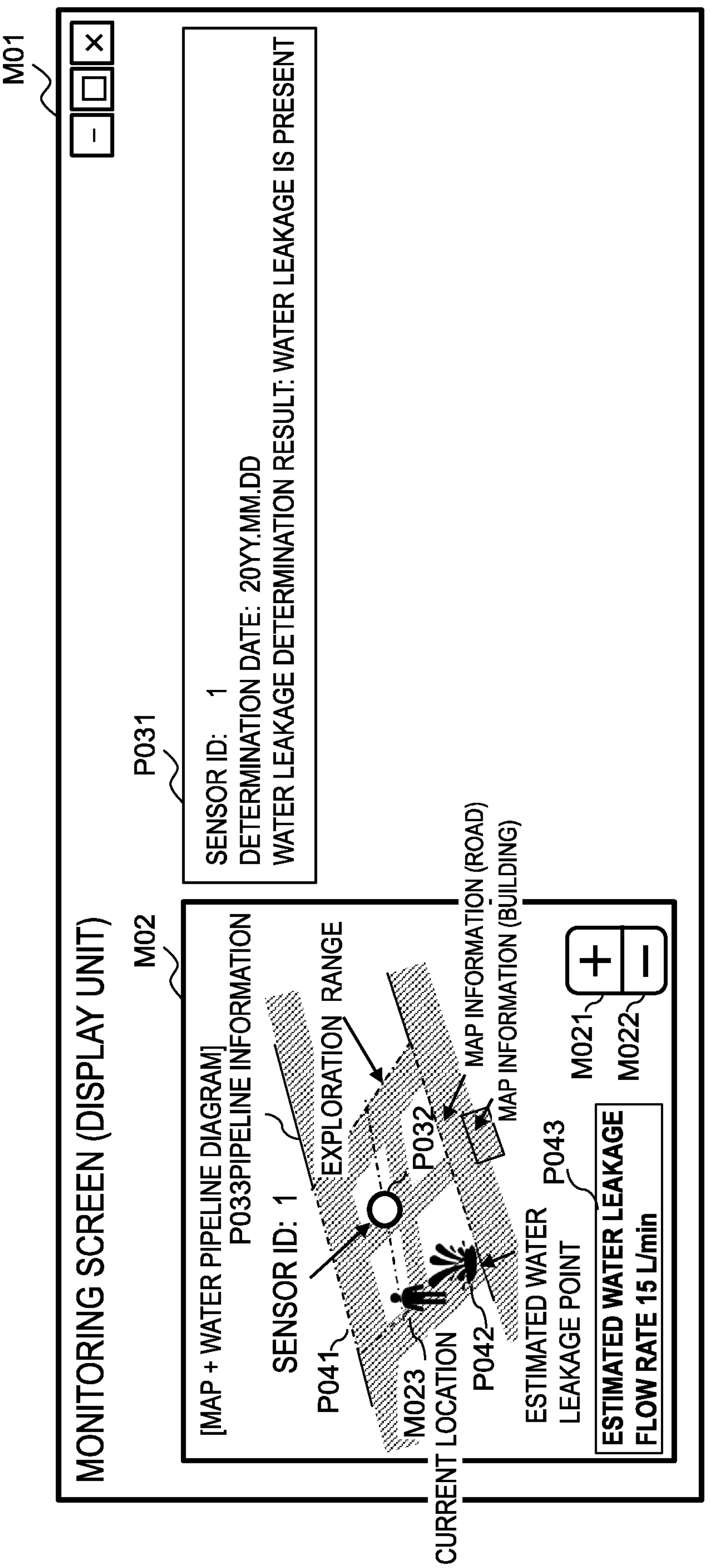
M01
MONITORING SCREEN (DISPLAY UNIT)
M02
[MAP + WATER PIPELINE DIAGRAM]
P033PIPELINE INFORMATION
SENSOR ID: 1
EXPLORATION RANGE
P032
MAP INFORMATION (ROAD)
MAP INFORMATION (BUILDING)
P041
M023
CURRENT LOCATION
P042
ESTIMATED WATER LEAKAGE POINT
P043
ESTIMATED WATER LEAKAGE FLOW RATE 15 L/min
M021
M022
P031
SENSOR ID: 1
DETERMINATION DATE: 20YY.MM.DD
WATER LEAKAGE DETERMINATION RESULT: WATER LEAKAGE IS PRESENT

Fig. 14

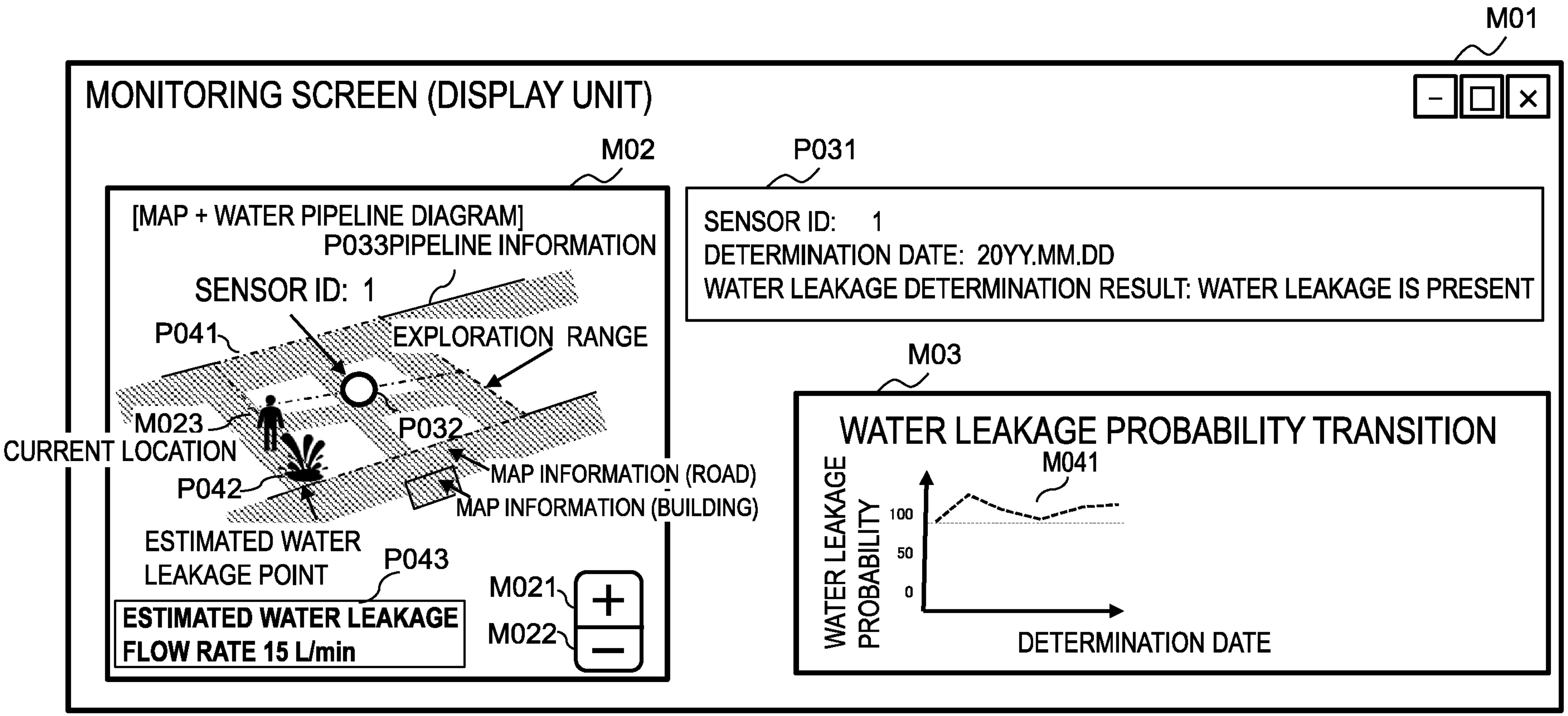
M01
MONITORING SCREEN (DISPLAY UNIT)
M02
[MAP + WATER PIPELINE DIAGRAM]
P033PIPELINE INFORMATION
SENSOR ID: 1
P041
EXPLORATION RANGE
M023
CURRENT LOCATION
P032
MAP INFORMATION (ROAD)
P042
MAP INFORMATION (BUILDING)
ESTIMATED WATER
LEAKAGE POINT
P043
ESTIMATED WATER LEAKAGE
FLOW RATE 15 L/min
M021
M022
P031
SENSOR ID: 1
DETERMINATION DATE: 20YY.MM.DD
WATER LEAKAGE DETERMINATION RESULT: WATER LEAKAGE IS PRESENT
M03
WATER LEAKAGE PROBABILITY TRANSITION
M041
WATER LEAKAGE PROBABILITY
100
50
0
DETERMINATION DATE

Fig. 15

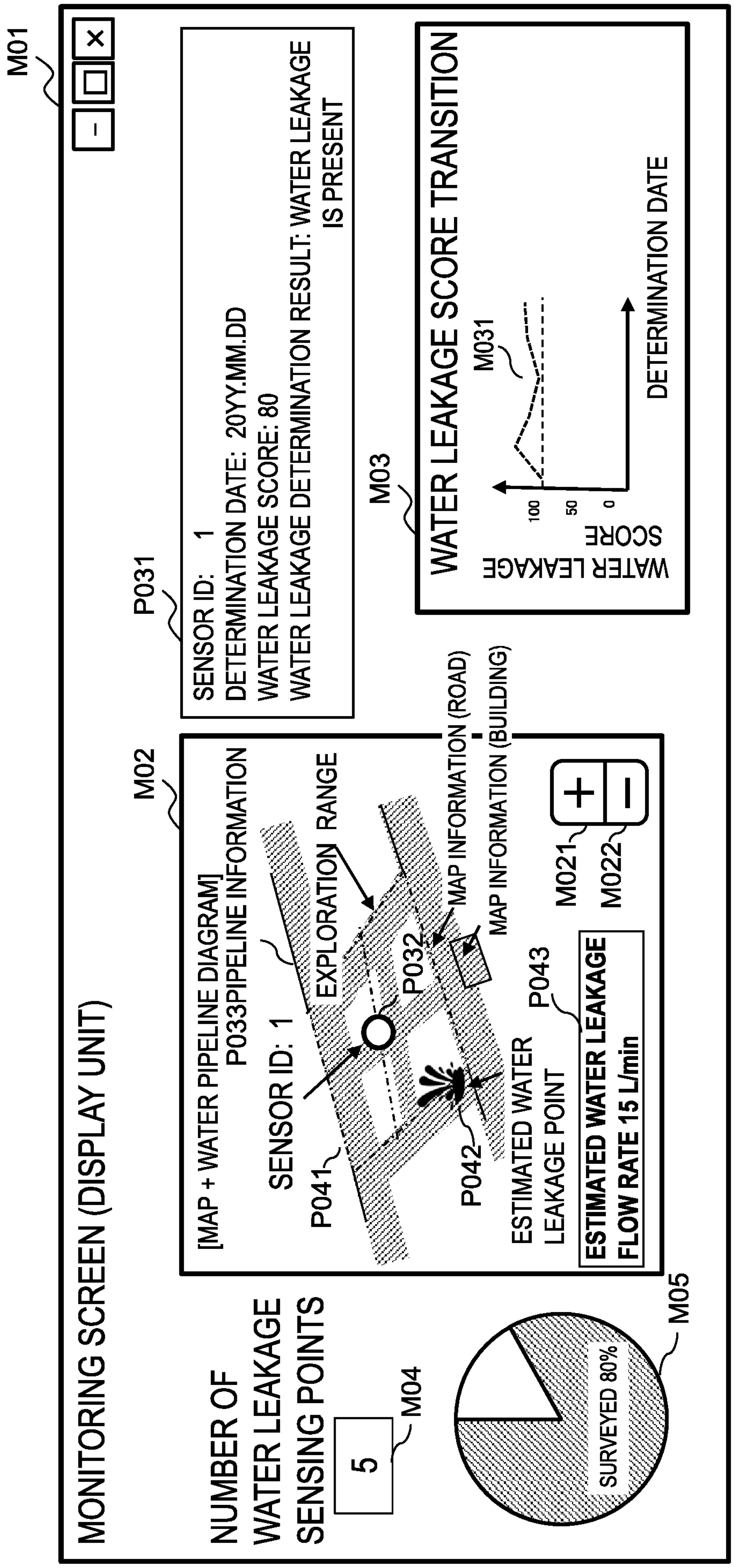
M01
MONITORING SCREEN (DISPLAY UNIT)
NUMBER OF WATER LEAKAGE SENSING POINTS
5
M04
SURVEYED 80%
M05
M02
[MAP + WATER PIPELINE DIAGRAM]
P033PIPELINE INFORMATION
SENSOR ID: 1
P041
EXPLORATION RANGE
P032
MAP INFORMATION (ROAD)
MAP INFORMATION (BUILDING)
P042
ESTIMATED WATER LEAKAGE POINT
P043
ESTIMATED WATER LEAKAGE FLOW RATE 15 L/min
M021
M022
P031
SENSOR ID: 1
DETERMINATION DATE: 20YY.MM.DD
WATER LEAKAGE SCORE: 80
WATER LEAKAGE DETERMINATION RESULT: WATER LEAKAGE IS PRESENT
M03
WATER LEAKAGE SCORE TRANSITION
M031
WATER LEAKAGE SCORE
100
50
0
DETERMINATION DATE

*Fig. 16*

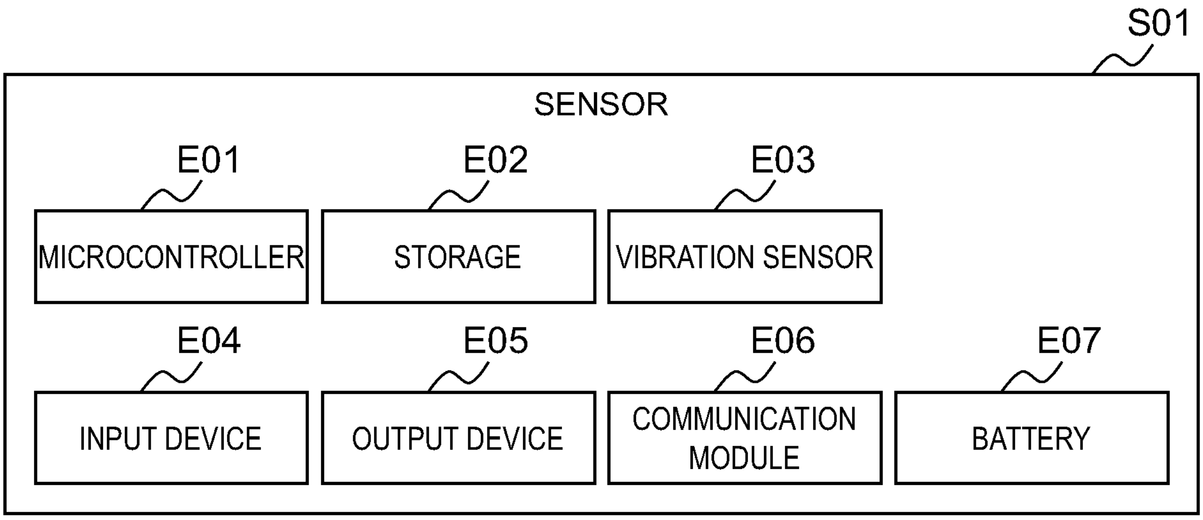
S01
SENSOR
E01
MICROCONTROLLER
E02
STORAGE
E03
VIBRATION SENSOR
E04
INPUT DEVICE
E05
OUTPUT DEVICE
E06
COMMUNICATION MODULE
E07
BATTERY

Fig. 17

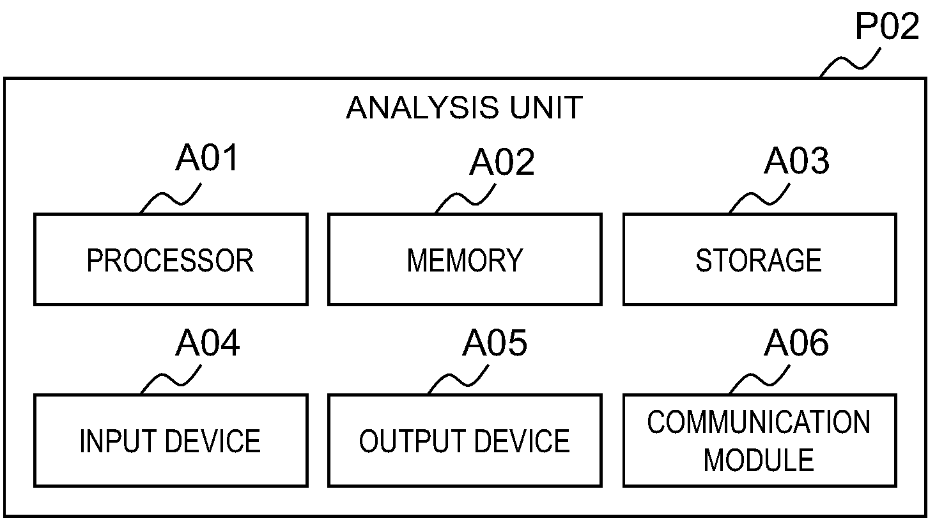
P02
ANALYSIS UNIT
A01
PROCESSOR
A02
MEMORY
A03
STORAGE
A04
INPUT DEVICE
A05
OUTPUT DEVICE
A06
COMMUNICATION MODULE

Fig. 18

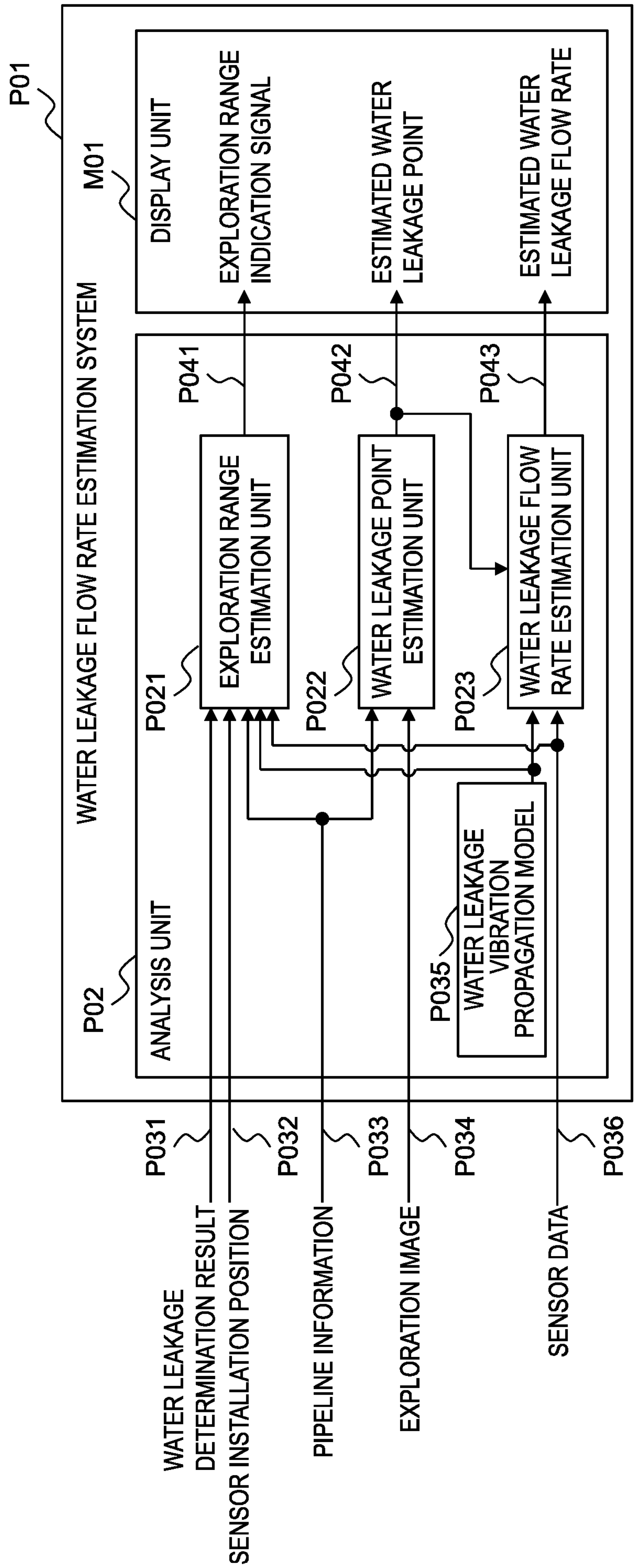
P01
WATER LEAKAGE FLOW RATE ESTIMATION SYSTEM
P02
ANALYSIS UNIT
P021
EXPLORATION RANGE ESTIMATION UNIT
P022
WATER LEAKAGE POINT ESTIMATION UNIT
P023
WATER LEAKAGE FLOW RATE ESTIMATION UNIT
P035
WATER LEAKAGE VIBRATION PROPAGATION MODEL
P041
P042
P043
M01
DISPLAY UNIT
EXPLORATION RANGE INDICATION SIGNAL
ESTIMATED WATER LEAKAGE POINT
ESTIMATED WATER LEAKAGE FLOW RATE
P031
WATER LEAKAGE DETERMINATION RESULT
P032
SENSOR INSTALLATION POSITION
P033
PIPELINE INFORMATION
P034
EXPLORATION IMAGE
P036
SENSOR DATA

Fig. 19

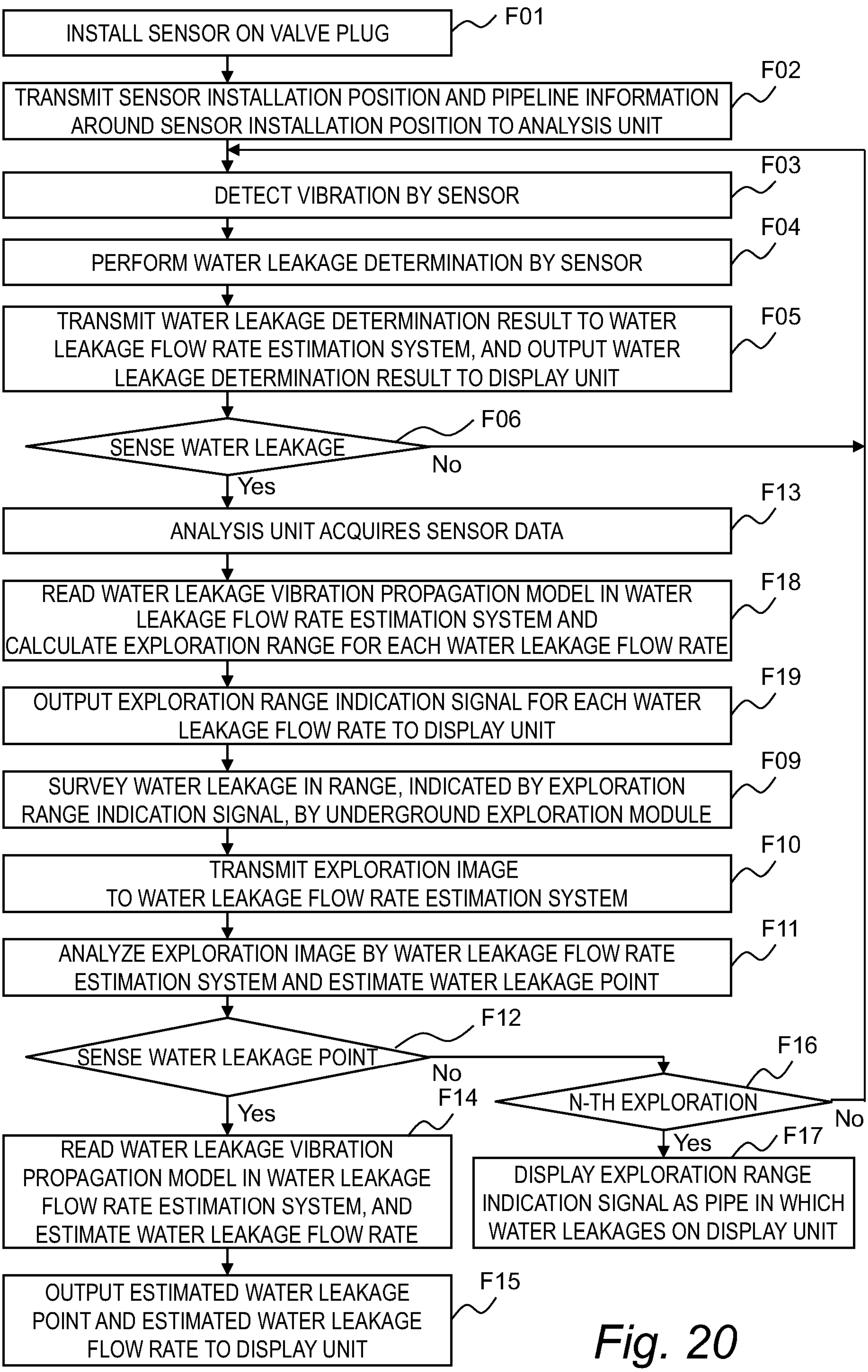
INSTALL SENSOR ON VALVE PLUG
F01
TRANSMIT SENSOR INSTALLATION POSITION AND PIPELINE INFORMATION AROUND SENSOR INSTALLATION POSITION TO ANALYSIS UNIT
F02
DETECT VIBRATION BY SENSOR
F03
PERFORM WATER LEAKAGE DETERMINATION BY SENSOR
F04
TRANSMIT WATER LEAKAGE DETERMINATION RESULT TO WATER LEAKAGE FLOW RATE ESTIMATION SYSTEM, AND OUTPUT WATER LEAKAGE DETERMINATION RESULT TO DISPLAY UNIT
F05
SENSE WATER LEAKAGE
F06
No
Yes
ANALYSIS UNIT ACQUIRES SENSOR DATA
F13
READ WATER LEAKAGE VIBRATION PROPAGATION MODEL IN WATER LEAKAGE FLOW RATE ESTIMATION SYSTEM AND CALCULATE EXPLORATION RANGE FOR EACH WATER LEAKAGE FLOW RATE
F18
OUTPUT EXPLORATION RANGE INDICATION SIGNAL FOR EACH WATER LEAKAGE FLOW RATE TO DISPLAY UNIT
F19
SURVEY WATER LEAKAGE IN RANGE, INDICATED BY EXPLORATION RANGE INDICATION SIGNAL, BY UNDERGROUND EXPLORATION MODULE
F09
TRANSMIT EXPLORATION IMAGE TO WATER LEAKAGE FLOW RATE ESTIMATION SYSTEM
F10
ANALYZE EXPLORATION IMAGE BY WATER LEAKAGE FLOW RATE ESTIMATION SYSTEM AND ESTIMATE WATER LEAKAGE POINT
F11
SENSE WATER LEAKAGE POINT
F12
No
Yes
N-TH EXPLORATION
F16
No
Yes
READ WATER LEAKAGE VIBRATION PROPAGATION MODEL IN WATER LEAKAGE FLOW RATE ESTIMATION SYSTEM, AND ESTIMATE WATER LEAKAGE FLOW RATE
F14
DISPLAY EXPLORATION RANGE INDICATION SIGNAL AS PIPE IN WHICH WATER LEAKAGES ON DISPLAY UNIT
F17
OUTPUT ESTIMATED WATER LEAKAGE POINT AND ESTIMATED WATER LEAKAGE FLOW RATE TO DISPLAY UNIT
F15

*Fig. 20*

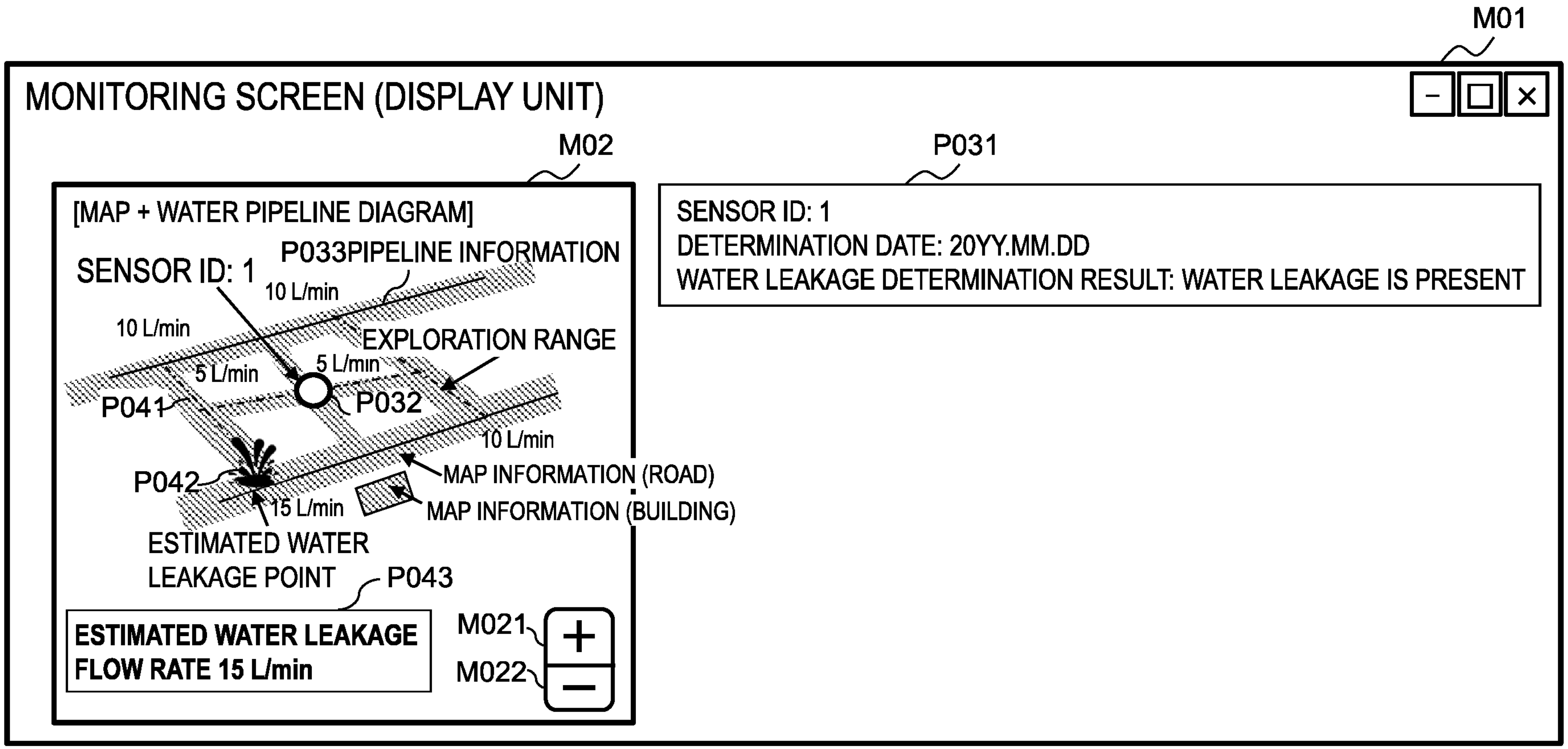
M01
MONITORING SCREEN (DISPLAY UNIT)
M02
[MAP + WATER PIPELINE DIAGRAM]
SENSOR ID: 1
P033PIPELINE INFORMATION
10 L/min
10 L/min
EXPLORATION RANGE
5 L/min
5 L/min
P041
P032
10 L/min
MAP INFORMATION (ROAD)
P042
15 L/min
MAP INFORMATION (BUILDING)
ESTIMATED WATER
LEAKAGE POINT
P043
ESTIMATED WATER LEAKAGE
FLOW RATE 15 L/min
M021
M022
P031
SENSOR ID: 1
DETERMINATION DATE: 20YY.MM.DD
WATER LEAKAGE DETERMINATION RESULT: WATER LEAKAGE IS PRESENT

Fig. 21

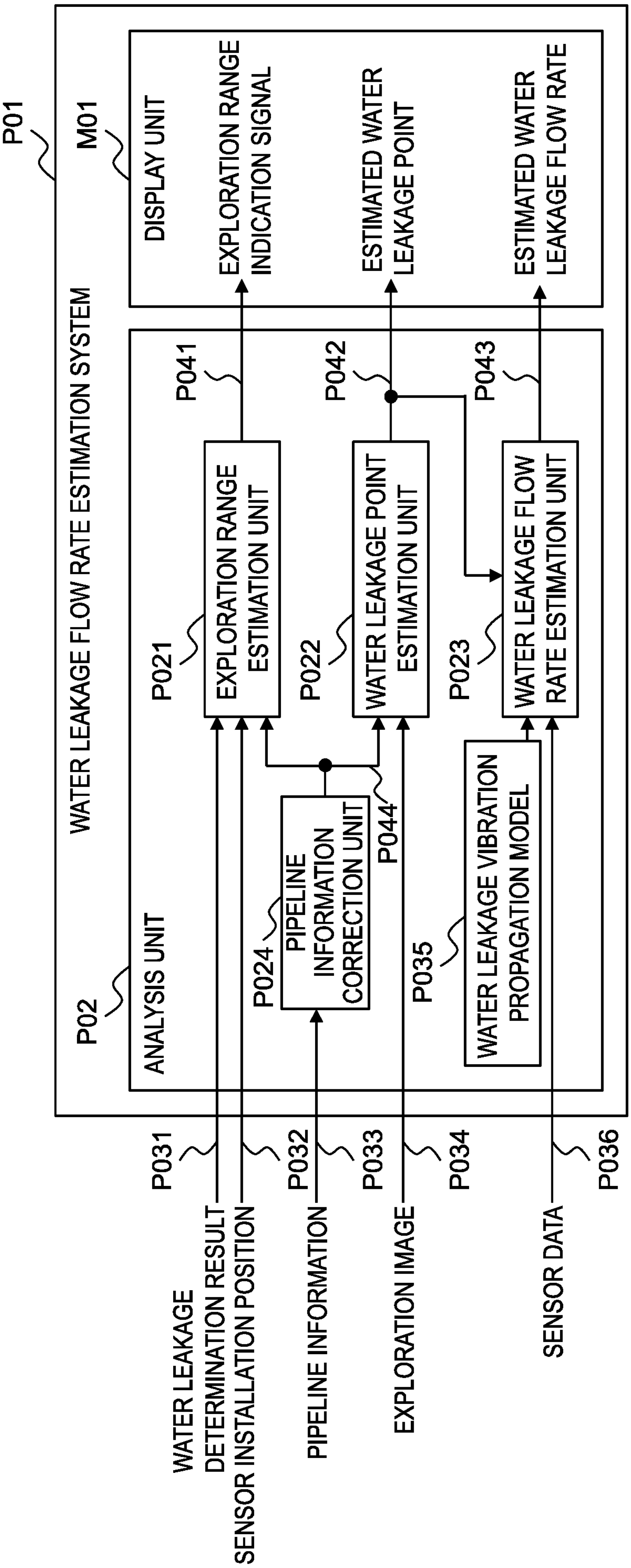
P01
WATER LEAKAGE FLOW RATE ESTIMATION SYSTEM
M01
DISPLAY UNIT
EXPLORATION RANGE INDICATION SIGNAL
ESTIMATED WATER LEAKAGE POINT
ESTIMATED WATER LEAKAGE FLOW RATE
P02
ANALYSIS UNIT
P041
P042
P043
P021
EXPLORATION RANGE ESTIMATION UNIT
P022
WATER LEAKAGE POINT ESTIMATION UNIT
P023
WATER LEAKAGE FLOW RATE ESTIMATION UNIT
P024
PIPELINE INFORMATION CORRECTION UNIT
P044
P035
WATER LEAKAGE VIBRATION PROPAGATION MODEL
P031
P032
P033
P034
P036
WATER LEAKAGE DETERMINATION RESULT
SENSOR INSTALLATION POSITION
PIPELINE INFORMATION
EXPLORATION IMAGE
SENSOR DATA

*Fig. 22*

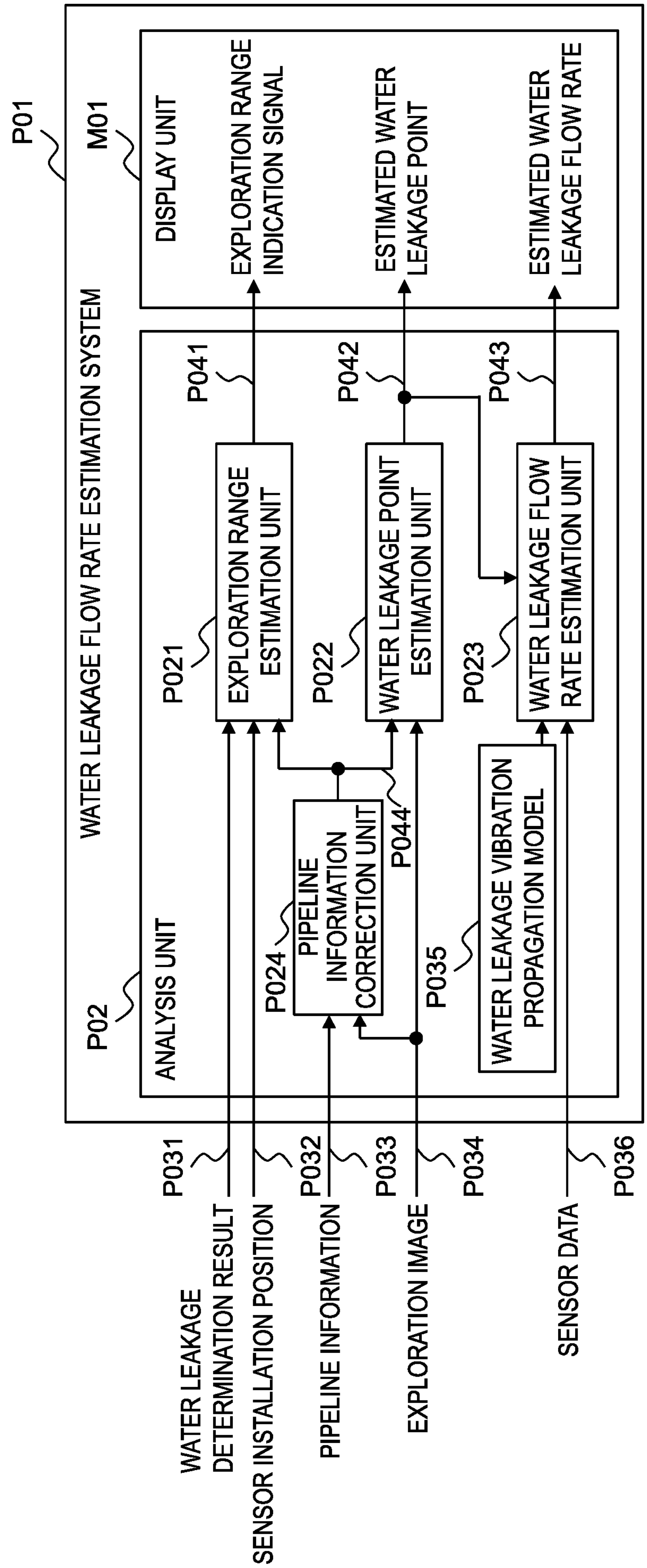
P01
WATER LEAKAGE FLOW RATE ESTIMATION SYSTEM
M01
DISPLAY UNIT
EXPLORATION RANGE INDICATION SIGNAL
ESTIMATED WATER LEAKAGE POINT
ESTIMATED WATER LEAKAGE FLOW RATE
P02
ANALYSIS UNIT
P041
P042
P043
P021
EXPLORATION RANGE ESTIMATION UNIT
P022
WATER LEAKAGE POINT ESTIMATION UNIT
P023
WATER LEAKAGE FLOW RATE ESTIMATION UNIT
P024
PIPELINE INFORMATION CORRECTION UNIT
P044
P035
WATER LEAKAGE VIBRATION PROPAGATION MODEL
P031
P032
P033
P034
P036
WATER LEAKAGE DETERMINATION RESULT
SENSOR INSTALLATION POSITION
PIPELINE INFORMATION
EXPLORATION IMAGE
SENSOR DATA

Fig. 23

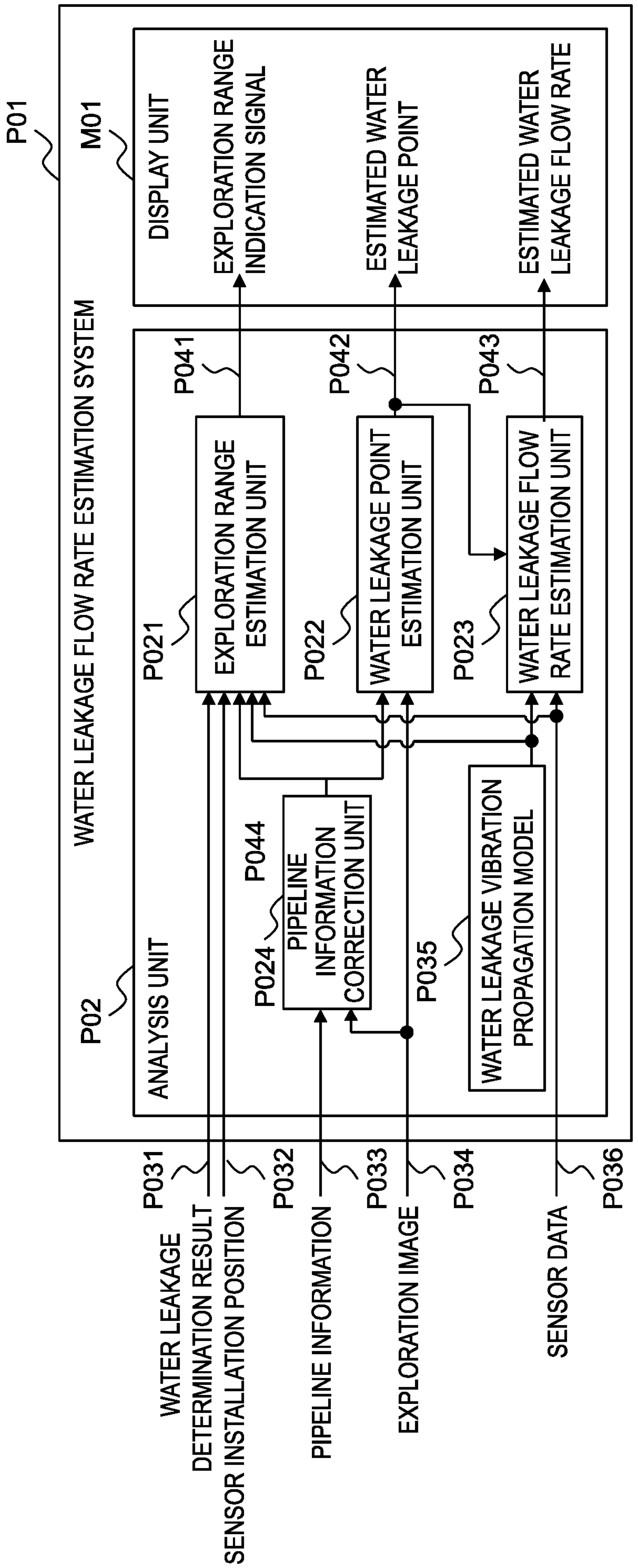

WATER LEAKAGE FLOW RATE ESTIMATION SYSTEM
P01
M01
DISPLAY UNIT
EXPLORATION RANGE INDICATION SIGNAL
ESTIMATED WATER LEAKAGE POINT
ESTIMATED WATER LEAKAGE FLOW RATE
P02
ANALYSIS UNIT
P041
P042
P043
P021
EXPLORATION RANGE ESTIMATION UNIT
P022
WATER LEAKAGE POINT ESTIMATION UNIT
P023
WATER LEAKAGE FLOW RATE ESTIMATION UNIT
P024
PIPELINE INFORMATION CORRECTION UNIT
P044
P035
WATER LEAKAGE VIBRATION PROPAGATION MODEL
P031
WATER LEAKAGE DETERMINATION RESULT
P032
SENSOR INSTALLATION POSITION
P033
PIPELINE INFORMATION
P034
EXPLORATION IMAGE
P036
SENSOR DATA


*Fig. 24*

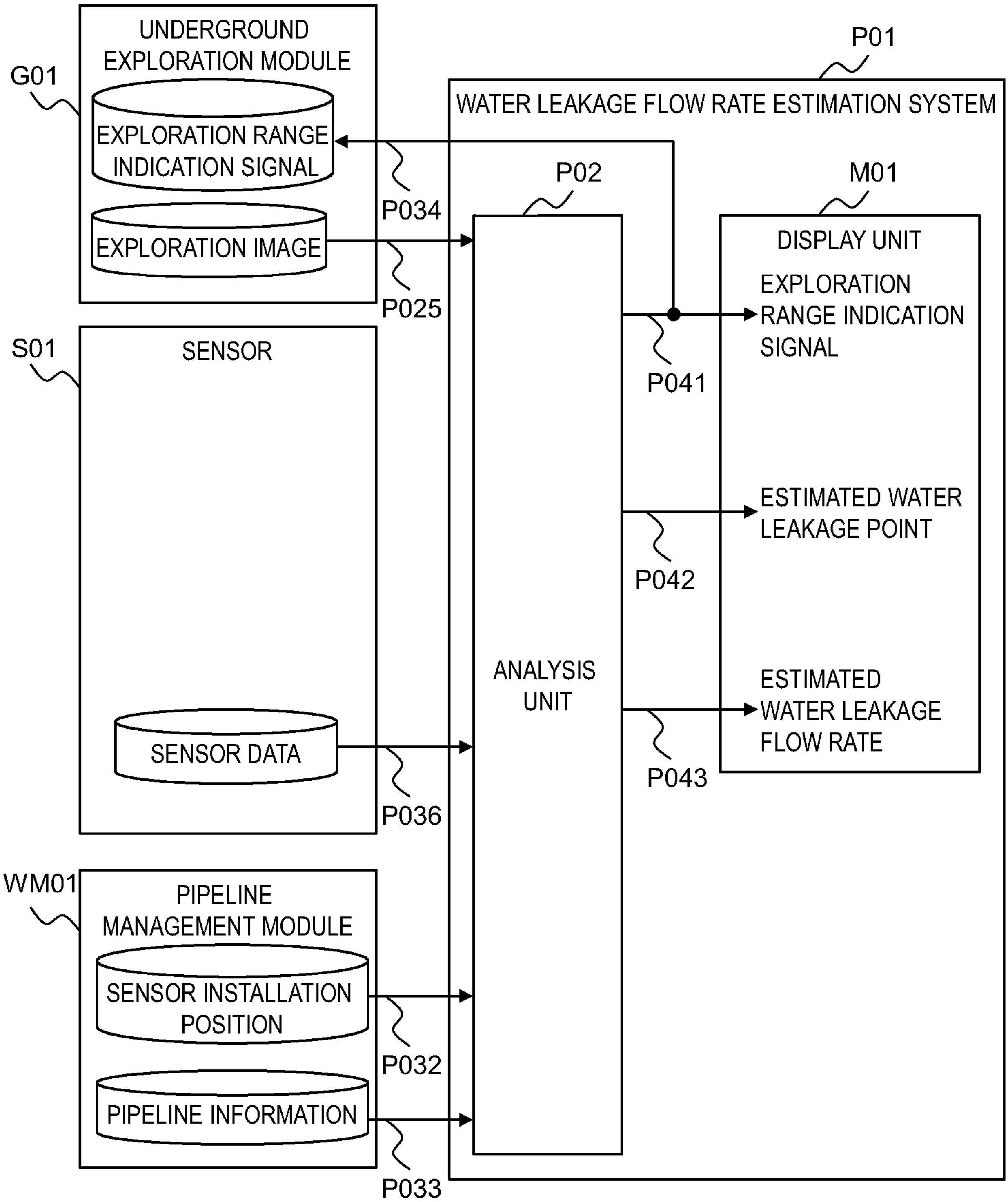
UNDERGROUND EXPLORATION MODULE
G01
EXPLORATION RANGE INDICATION SIGNAL
EXPLORATION IMAGE
P034
P025
S01
SENSOR
SENSOR DATA
P036
WM01
PIPELINE MANAGEMENT MODULE
SENSOR INSTALLATION POSITION
P032
PIPELINE INFORMATION
P033
P01
WATER LEAKAGE FLOW RATE ESTIMATION SYSTEM
P02
ANALYSIS UNIT
M01
DISPLAY UNIT
EXPLORATION RANGE INDICATION SIGNAL
P041
ESTIMATED WATER LEAKAGE POINT
P042
ESTIMATED WATER LEAKAGE FLOW RATE
P043

*Fig. 25*

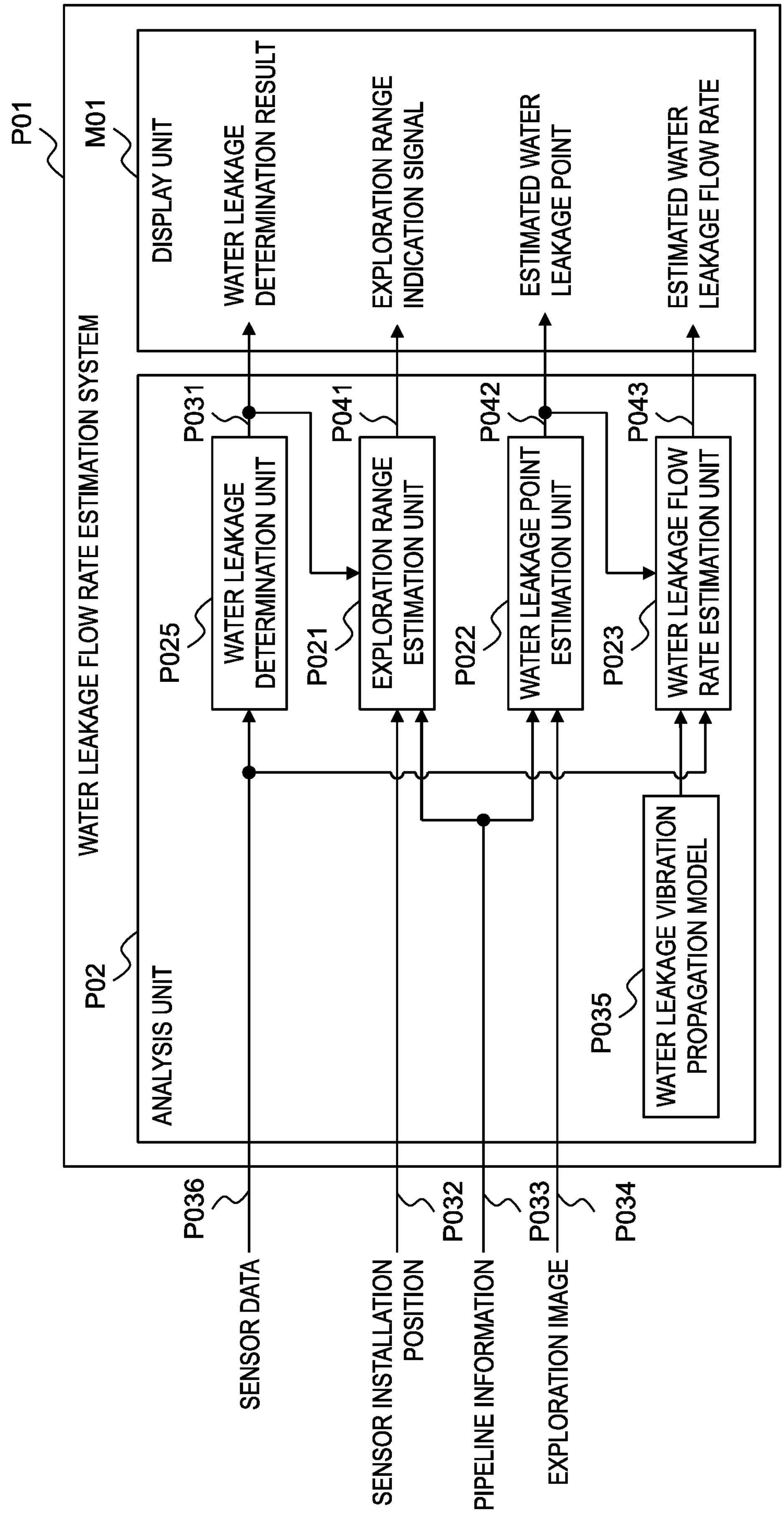
P01
WATER LEAKAGE FLOW RATE ESTIMATION SYSTEM
P02
ANALYSIS UNIT
M01
DISPLAY UNIT
P025
WATER LEAKAGE DETERMINATION UNIT
P021
EXPLORATION RANGE ESTIMATION UNIT
P022
WATER LEAKAGE POINT ESTIMATION UNIT
P023
WATER LEAKAGE FLOW RATE ESTIMATION UNIT
P035
WATER LEAKAGE VIBRATION PROPAGATION MODEL
P031
P041
P042
P043
WATER LEAKAGE DETERMINATION RESULT
EXPLORATION RANGE INDICATION SIGNAL
ESTIMATED WATER LEAKAGE POINT
ESTIMATED WATER LEAKAGE FLOW RATE
P036
SENSOR DATA
P032
SENSOR INSTALLATION POSITION
P033
PIPELINE INFORMATION
P034
EXPLORATION IMAGE

Fig. 26

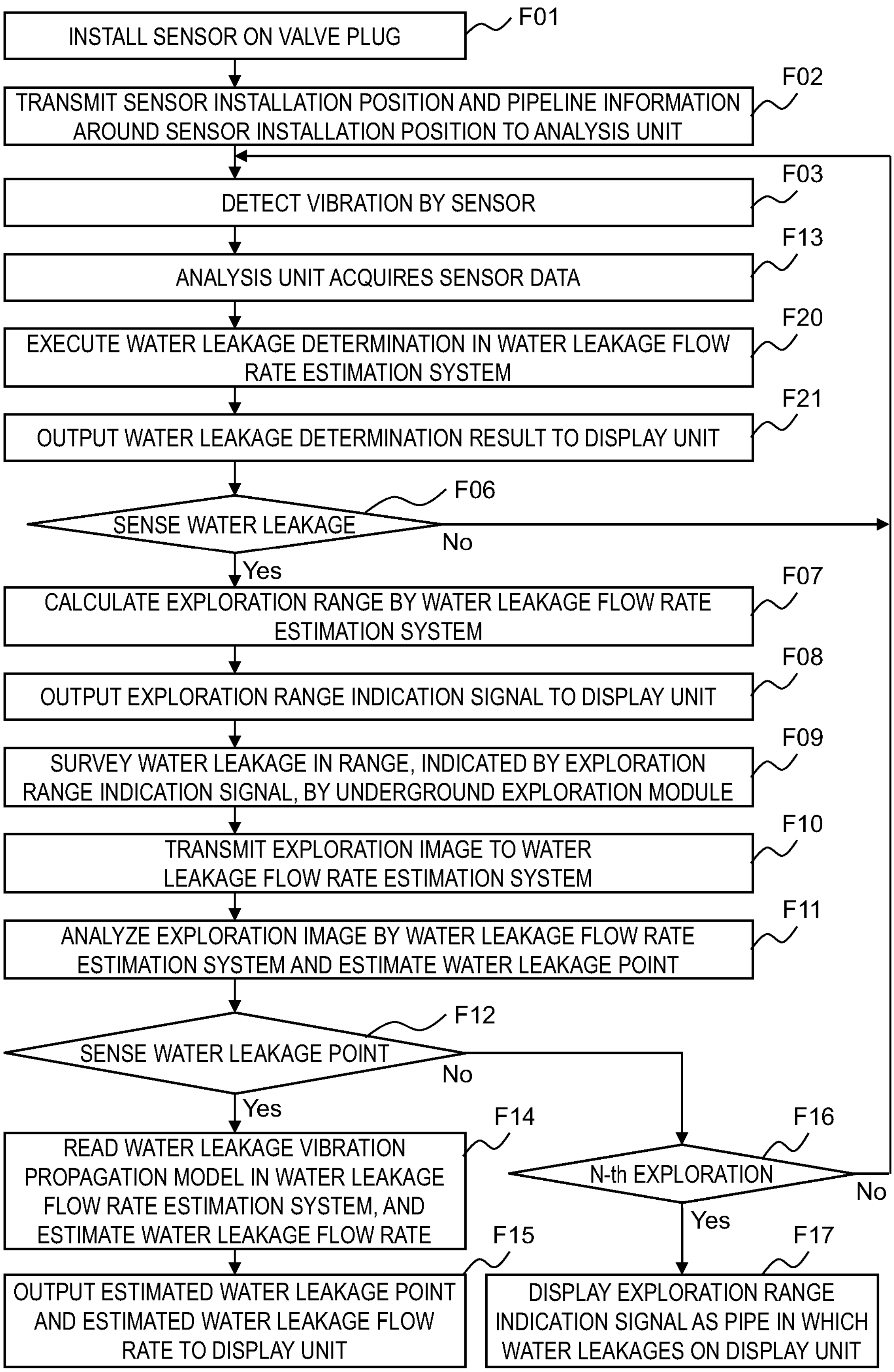
INSTALL SENSOR ON VALVE PLUG
F01
TRANSMIT SENSOR INSTALLATION POSITION AND PIPELINE INFORMATION AROUND SENSOR INSTALLATION POSITION TO ANALYSIS UNIT
F02
DETECT VIBRATION BY SENSOR
F03
ANALYSIS UNIT ACQUIRES SENSOR DATA
F13
EXECUTE WATER LEAKAGE DETERMINATION IN WATER LEAKAGE FLOW RATE ESTIMATION SYSTEM
F20
OUTPUT WATER LEAKAGE DETERMINATION RESULT TO DISPLAY UNIT
F21
SENSE WATER LEAKAGE
F06
No
Yes
CALCULATE EXPLORATION RANGE BY WATER LEAKAGE FLOW RATE ESTIMATION SYSTEM
F07
OUTPUT EXPLORATION RANGE INDICATION SIGNAL TO DISPLAY UNIT
F08
SURVEY WATER LEAKAGE IN RANGE, INDICATED BY EXPLORATION RANGE INDICATION SIGNAL, BY UNDERGROUND EXPLORATION MODULE
F09
TRANSMIT EXPLORATION IMAGE TO WATER LEAKAGE FLOW RATE ESTIMATION SYSTEM
F10
ANALYZE EXPLORATION IMAGE BY WATER LEAKAGE FLOW RATE ESTIMATION SYSTEM AND ESTIMATE WATER LEAKAGE POINT
F11
SENSE WATER LEAKAGE POINT
F12
No
Yes
READ WATER LEAKAGE VIBRATION PROPAGATION MODEL IN WATER LEAKAGE FLOW RATE ESTIMATION SYSTEM, AND ESTIMATE WATER LEAKAGE FLOW RATE
F14
N-th EXPLORATION
F16
No
Yes
OUTPUT ESTIMATED WATER LEAKAGE POINT AND ESTIMATED WATER LEAKAGE FLOW RATE TO DISPLAY UNIT
F15
DISPLAY EXPLORATION RANGE INDICATION SIGNAL AS PIPE IN WHICH WATER LEAKAGES ON DISPLAY UNIT
F17

*Fig. 27*

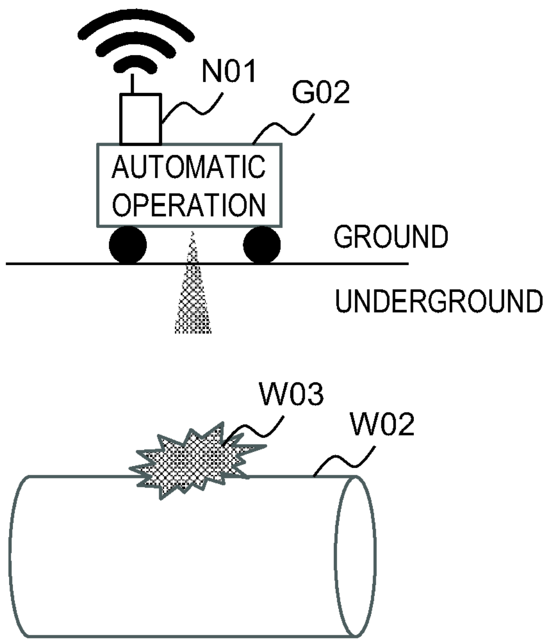


Fig. 28

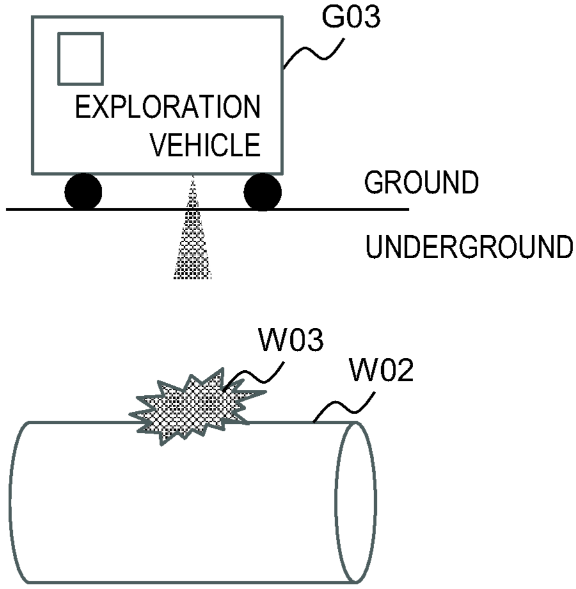


Fig. 29

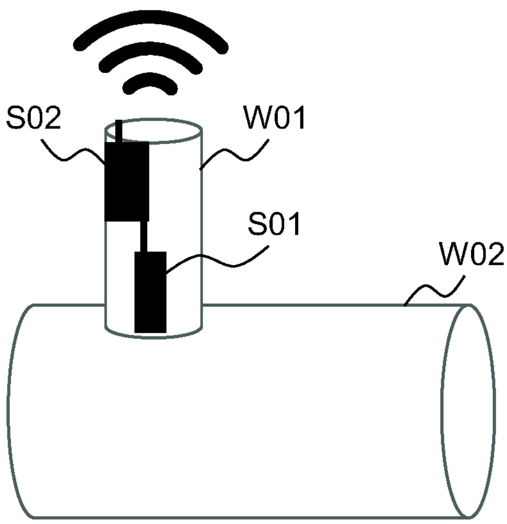


Fig. 30

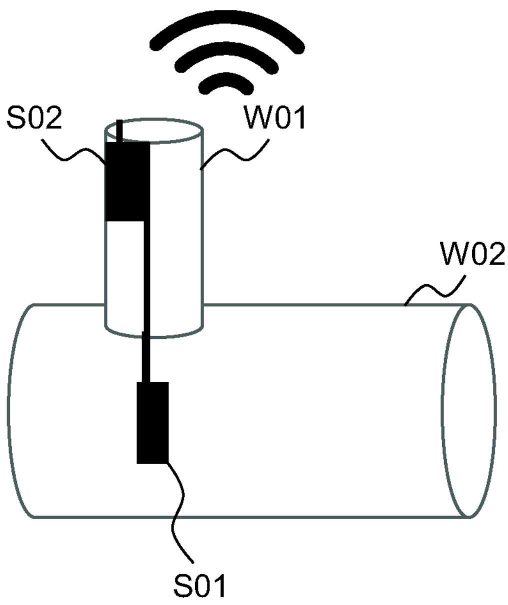


Fig. 31

## INTERNATIONAL SEARCH REPORT

International application No.
**PCT/JP2024/000020**

**A. CLASSIFICATION OF SUBJECT MATTER**

***G01M 3/24***(2006.01)i
FI: G01M3/24 A

According to International Patent Classification (IPC) or to both national classification and IPC

**B. FIELDS SEARCHED**

Minimum documentation searched (classification system followed by classification symbols)

G01M3/00-3/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2015/129031 A1 (HITACHI, LTD.) 03 September 2015 (2015-09-03) paragraphs [0012]-[0086], [0132]-[0143], fig. 1-12, 22-24 | 1-14 |
| A | JP 6245452 B2 (NEC CORPORATION) 13 December 2017 (2017-12-13) paragraphs [0016]-[0056], fig. 1-9 | 1-14 |
| A | JP 2022-176833 A (HITACHI, LTD.) 30 November 2022 (2022-11-30) paragraphs [0024]-[0075], fig. 1-13 | 1-14 |
| A | JP 7343863 B2 (HOKKAIDO GAS KK) 13 September 2023 (2023-09-13) paragraphs [0024]-[0086], fig. 1-8 | 1-14 |
| A | JP 6334417 B2 (KABUSHIKI KAISHA TOSHIBA) 30 May 2018 (2018-05-30) entire text, all drawings | 1-14 |
| A | JP 6936200 B2 (HITACHI, LTD.) 15 September 2021 (2021-09-15) entire text, all drawings | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/000020**

**C. DOCUMENTS CONSIDERED TO BE RELEVANT**

| Category* | Citation of document, with indication, where appropriate, of the relevant passages | Relevant to claim No. |
|---|---|---|
| A | CN 114001880 A (HEFEI INSTITUTE FOR PUBLIC SAFETY RESERCH, TSINGHUA UNIVERSITY) 01 February 2022 (2022-02-01) entire text, all drawings | 1-14 |

Form PCT/ISA/210 (second sheet) (July 2022)

**INTERNATIONAL SEARCH REPORT**
**Information on patent family members**

International application No.
**PCT/JP2024/000020**

| Patent document cited in search report | Publication date (day/month/year) | Patent family member(s) | Publication date (day/month/year) |
|---|---|---|---|
| WO 2015/129031 A1 | 03 September 2015 | (Family: none) | |
| JP 6245452 B2 | 13 December 2017 | US 2015/0276539 A1<br>paragraphs [0026]-[0067], fig. 1-9<br>WO 2014/046122 A1<br>EP 2899525 A1 | |
| JP 2022-176833 A | 30 November 2022 | (Family: none) | |
| JP 7343863 B2 | 13 September 2023 | (Family: none) | |
| JP 6334417 B2 | 30 May 2018 | WO 2016/114238 A1<br>entire text, all drawings<br>CN 107250753 A | |
| JP 6936200 B2 | 15 September 2021 | US 2020/0103306 A1<br>entire text, all drawings | |
| CN 114001880 A | 01 February 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023163004 A
- JP 2018040615 A
- JP 2020076646 A